# EUROPÄISCHE PATENTSCHRIFT

(11) **EP 3 049 234 B1**
(45) Veröffentlichungstag und Bekanntmachung des Hinweises auf die Patenterteilung: **27.11.2019**
(21) Anmeldenummer: 14771578.3
(22) Anmeldetag: 22.09.2014
(51) Int. Cl.: B29C 49/20, B29C 49/48, B29C 49/54, B29B 11/08, B29C 49/06, B29C 49/08, B29C 49/12, B29C 49/42, B29C 49/64, B29B 11/00, B29L 31/00

(54) **VERFAHREN UND VORRICHTUNG ZUR HERSTELLUNG EINER BEFÜLLTEN SBM-FLASCHE**
METHOD AND APPARATUS FOR PRODUCING A FILLED SBM BOTTLE
PROCÉDÉ ET DISPOSITIF DE FABRICATION D'UNE BOUTEILLE SBM REMPLIE

(30) Priorität: 24.09.2013 EP 13185818
(43) Veröffentlichungstag der Anmeldung: 03.08.2016
(73) Patentinhaber: Fresenius Kabi Deutschland GmbH, 61352 Bad Homburg (DE)
(72) Erfinder: BRANDENBURGER, Torsten, 61203 Reichelsheim (DE); PFEFFER, Andreas, 35305 Grünberg (DE); FRENSCH, Christian, 65719 Hofheim (DE)
(74) Vertreter: Fresenius Kabi Deutschland GmbH
(86) Internationale Anmeldenummer: PCT/EP2014/070131
(87) Internationale Veröffentlichungsnummer: WO 2015/044085

(56) Entgegenhaltungen:
- EP-B1- 0 483 671
- WO-A1-2012/161150
- JP-A- H0 780 920
- JP-A- H07 148 829
- US-A- 4 395 378

## Beschreibung

Die vorliegende Erfindung betrifft einen sterilisierten Behälter, welche mit einer Infusionslösung befüllt ist, ein Verfahren sowie eine Anlage zum Herstellen des sterilisierten Behälters.

### Allgemeine Beschreibung der Erfindung

Behälter zur Aufnahme von Flüssigkeiten für medizinische Anwendungen müssen besondere Anforderungen, insbesondere an die Sterilität, erfüllen. Es sind zum Beispiel Flaschen aus extrudiertem PE bekannt, die in einem Arbeitsgang durch Strecken und Blasformen in die gewünschte Form gebracht, befüllt und dann anschließend hermetisch verschlossen werden (Blow-Fill-Seal-Verfahren). Die bekannten Behälter für Infusionslösungen oder enterale Nährlösungen werden im Allgemeinen an einem Ständer aufgehängt. Dafür verfügen die Behälter über einen Aufhänger. Diese Aufhänger sind im Allgemeinen als Ösen ausgebildet, um die Flasche an einem Haken aufhängen zu können. Die Herstellung eines mittels Blow-Fill-Seal hergestellten Behälters ist jedoch recht hoch, da neben der Blow-Fill-Seal-Anlage noch eine Extrusiosanlage erforderlich ist.

In der EP 0 483671 B1 sind ein Verfahren und eine Form zur Herstellung eines Infusionsbehältnisses, das über einen ringförmigen Aufhänger am Boden einer Flasche verfügt, beschrieben Die Flasche wird durch Strecken und Aufblasen aus einem Vorformling (Preform) hergestellt (Stretch-Blow-Moulding-Verfahren: kurz SBM). Der Vorformling selbst wird zusammen mit dem ringförmigen Aufhänger in einem Spritzgießverfahren gefertigt. Das Herstellungsverfahren mittels Strecken und Aufblasen zeichnet sich dadurch aus, dass ein weiterer Arbeitsschritt zur Befestigung eines Aufhängers nach dem Blasformen nicht erforderlich ist. Die Form, in der der Vorformling aufgeblasen wird, weist am Boden eine Aussparung auf, um beim Aufblasen den am Boden des Vorformlings befestigten Hänger aufnehmen zu können. Verläuft das Aufblasen jedoch nicht ausreichend präzise, kann der Hänger die Ausnehmung verfehlen und dann zum Beispiel mit dem Grundkörper der aufgeblasenen Flasche dauerhaft verkleben und/oder den aufgeblasenen Grundkörper in seiner Dichtigkeit beeinträchtigen.

In der EP 2 716 430 A1 ist ein mittels SBM hergestellter Container mit einem Hänger beschrieben. Die Breite des hergestellten Containers ist größer als seine Tiefe. Es ist allgemein angegeben, dass der Hänger gekippt wird zwischen der Spitzgussherstellung des Vorformlings und dem Blasformen des Containers aus dem Vorformling. Weitergehende Erläuterungen finden sich nicht. Der Hänger ist hier in Richtung der, gegenüber der Breite, kleineren Tiefe auf die Unterseite des Containers gekippt. Mit einem Hänger versehene Container und entsprechende Vorformling sind auch noch in JPH07148829 und JPH0780920 beschrieben.

Vor dem vorstehend geschilderten Hintergrund liegt der vorliegenden Erfindung die Aufgabe zugrunde, die vorstehend genannten Nachteile wenigstens zu reduzieren. Insbesondere soll es möglich sein, einen Behälter für eine Infusionslösung mittels Stretch Blow Moulding zuverlässig und einfach herzustellen.

Diese Aufgabe wird gelöst durch die Gegenstände mit den Merkmalen nach den unabhängigen Patentansprüchen. Vorteilhafte Ausführungsformen sind Gegenstand der Beschreibung, der Figuren und der abhängigen Ansprüche.

Im Detail wird die vorliegende Erfindung beschrieben durch ein Verfahren zur Herstellung eines, vorzugsweise mit einer Infusionslösung, befüllten Behälters mit einem Grundkörper, der eine Breite, die sich entlang einer ersten Querachse des Behälters erstreckt, und eine Tiefe, die sich entlang einer senkrecht zu der ersten Querachse verlaufenden, zweiten Querachse des Behälters erstreckt, besitzt, wobei die Breite des Grundkörpers größer als die Tiefe des Grundkörpers ist, umfassend die folgenden Verfahrensschritte:
- Bereitstellen eines Vorformlings mit einem an einem Boden des Vorformlings angeordneten Hänger, wobei eine Querachse des Hängers im Wesentlichen quer, vorzugsweise senkrecht, zu der ersten Querachse des Behälters angeordnet ist,
- Erwärmen des bereitgestellten Vorformlings in einer Heizeinrichtung,
- Zuführen des erwärmten Vorformlings in eine Streck- und Aufblasvorrichtung,
- Strecken und Aufblasen des Vorformlings in der Streck- und Aufblasvorrichtung, so dass der Behälter für die Infusionslösung aus dem Vorformling geformt wird,
- insbesondere Reinigen des geformten Behälters, vorzugsweise in einer Spülvorrichtung, und gegebenenfalls Trocknen des gereinigten Behälters in einer Trockeneinrichtung,
- Befüllen des, insbesondere gereinigten und gegebenenfalls getrockneten, Behälters über eine in dem Behälter vorhandene Einfüllöffnung, beispielsweise in der Gestalt eines geöffneten Flaschenhalses, zumindest mit einer Infusionslösung oder mit einer Flüssigkeit für medizinische Zwecke in einer Füllanlage,
- Verschließen des Behälters durch Aufbringen eines Verschlusses, vorzugsweise einer Verschlusskappe, auf die Einfüllöffnung des Behälters,
- Sterilisieren des verschlossenen Behälters, vorzugsweise in einem Autoklaven oder allgemein in einer Sterilisierungseinrichtung,
wobei der Hänger des Vorformlings vor dem Strecken und Aufblasen in der Streck- und Aufblasvorrichtung ausgerichtet und, insbesondere durch eine Biegevorrichtung, in Richtung der ersten Querachse des aus dem Vorformling geformten Behälters umgelegt oder umgebogen wird. Insbesondere wird der Vorformling über seinen Umfang im Wesentlichen nicht gleichmäßig erwärmt.

Der Hänger ist in Richtung der ersten Querachse des Behälters, entlang derer die Breite des Behälters definiert wird, in Richtung auf die Unterseite des hergestellten Behälters umgelegt oder gebogen. Durch die nicht rotationssymmetrische Ausgestaltung des hergestellten Behälters und die gewählte Orientierung des Hängers zu dem Behälter wird insbesondere die Herstellung des Behälters vereinfacht. In einer Ausführung des Verfahrens können so die Seiten des Behälters, die nach dem Strecken und Aufblasen die gegenüber der Tiefe größere Breite des Behälters bilden, in der Heizeinrichtung stärker erwärmt werden und zudem kann der Hänger durch die Biegevorrichtung umgelegt werden.

Die Erfindung kann auch beschrieben werden durch ein Verfahren zur Herstellung eines, vorzugsweise mit einer Infusionslösung, befüllten Behälters, umfassend die folgenden Verfahrensschritte: Bereitstellen eines Vorformlings mit einem an einem Boden des Vorformlings angeordneten Hänger; Erwärmen des bereitgestellten Vorformlings in einer Heizeinrichtung; Zuführen des erwärmten Vorformlings in eine Streck- und Aufblasvorrichtung; Strecken und Aufblasen des Vorformlings in der Streck- und Aufblasvorrichtung, so dass der Behälter für die Infusionslösung aus dem Vorformling geformt wird; insbesondere Reinigen des geformten Behälters, vorzugsweise in einer Spülvorrichtung, und gegebenenfalls Trocknen des gereinigten Behälters in einer Trockeneinrichtung; Befüllen des, insbesondere gereinigten und gegebenenfalls getrockneten, Behälters über eine in dem Behälter vorhandene Einfüllöffnung, beispielsweise in der Gestalt eines geöffneten Flaschenhalses, zumindest mit einer Infusionslösung oder mit einer Flüssigkeit für medizinische Zwecke in einer Füllanlage; Verschließen des Behälters durch Aufbringen eines Verschlusses, vorzugsweise einer Verschlusskappe, auf die Einfüllöffnung des Behälters; Sterilisieren des verschlossenen Behälters, vorzugsweise in einem Autoklaven oder allgemein in einer Sterilisierungseinrichtung; wobei der Hänger des Vorformlings vor dem Strecken und Aufblasen in der Streck- und Aufblasvorrichtung ausgerichtet und, insbesondere durch eine Biegevorrichtung, umgelegt oder umgebogen wird, insbesondere und/oder wobei der Vorformling über seinen Umfang im Wesentlichen nicht gleichmäßig erwärmt wird.

Durch das Umbiegen des Hängers kann der Vorformling derart in der Streck- und Aufblasvorrichtung aufgeblasen werden, dass der aus dem Vorformling geformte Behälter an seiner Unterseite einen integralen, vorzugsweise schwenkbaren, Hänger aufweist, der nicht mit dem aufgeblasenem Grundkörper des Behälters dauerhaft verklebt ist.

Im Bereich der Erfindung liegt auch eine Anlage zum Befüllen eines Behälters oder zum Herstellen eines befüllten Behälters mit einer Infusionslösung, umfassend:
- Eine Einrichtung zum Bereitstellen eines Vorformlings, insbesondere mit einem an einem Boden des Vorformlings angeordneten Hänger,
- eine Heizeinrichtung zum Erwärmen des bereitgestellten Vorformlings,
- eine Einrichtung zum Strecken und Aufblasen des Vorformlings, so dass der Behälter für die Infusionslösung aus dem Vorformling formbar ist,
- insbesondere eine Einrichtung zum Reinigen des geformten Behälters, vorzugsweise eine Spülvorrichtung, und gegebenenfalls eine Einrichtung zum Trocknen des gereinigten Behälters,
- eine Füllanlage, in welcher der, insbesondere gereinigte und gegebenenfalls getrocknete, Behälter über eine in dem Behälter vorhandene Einfüllöffnung zumindest mit einer Infusionslösung befüllt werden kann,
- eine Einrichtung zum Verschließen des Behälters,
einen Autoklaven oder allgemein eine Sterilisierungseinrichtung, in dem bzw. der der verschlossenen Behälter sterilisierbar ist, und
eine erste Transporteinrichtung zum Führen des Vorformlings in der Heizeinrichtung und/oder insbesondere zum Zuführen des erwärmten Vorformlings in die Streck- und Aufblasvorrichtung, in welcher der Vorformling drehbar gelagert ist und über eine Drehung ausgerichtet werden kann und/oder eine vor der Streck- und Aufblasvorrichtung angeordnete Biegevorrichtung, in welcher der, vorzugsweise zuvor ausgerichtete, Hänger des Vorformlings, umgelegt werden kann.

Es ist hier zwar nicht explizit erwähnt, aber es können noch weitere, zum Beispiel zweite oder dritte Transporteinrichtungen vorgesehen sein, welche den Transport des Vorformlings und/oder des leeren Behälters und/oder des befüllten Behälters und/oder des verschlossenen Behälters und/oder des sterilisierten Behälters in der erfindungsgemäßen Anlage ermöglichen. In einer Ausführungsform umfasst die erste Transporteinrichtung zumindest einen bewegbar angeordneten Drehstift, auf welchem der Vorformling lagerbar ist oder gelagert wird und über den die Drehung des Vorformlings bereitstellbar ist oder bereitgestellt wird.

In einer Ausgestaltung ist die Biegevorrichtung durch eine vor der der Streck- und Aufblasvorrichtung, beispielsweise in oder nach der Heizeinrichtung, angeordnete Kante bereitstellbar. Diese ist, vorzugsweise ortsfest und, seitlich versetzt gegenüber der ersten Transporteinrichtung so angeordnet ist, dass der Hänger des Vorformlings mittels der Bewegung der ersten Transporteinrichtung gegen die Kante bewegt, dort zur Anlage gebracht und umgebogen werden kann.

Vorzugsweise wird der Vorformling so ausgerichtet, dass eine Querachse Q_{H} des Hängers im Wesentlichen quer, vorzugsweise senkrecht, zu einer Bewegungsrichtung des Vorformlings liegt. Der Vorformling kann bereits beim Bereitstellen, beim Erwärmen und/oder erst beim Zuführen in die Streck- und Aufblasvorrichtung ausgerichtet werden.

In einer Ausführungsform der Erfindung wird der Hänger des Vorformlings durch die Biegevorrichtung von einer Längsachse L des Vorformlings weg in Richtung auf den Boden oder auf die Unterseite des Vorformlings gebogen. Der Hänger kann zunächst aufrecht auf dem Boden des Vorformlings stehen. Die Längsachse L_{H} des Hängers kann in diesem Fall im Wesentlichen parallel zu der Längsachse L des Vorformlings verlaufen. Durch die Biegevorrichtung kann dann der Aufhänger in Bezug auf die Längsachse L des Vorformlings auf einen Winkel von 45° ≤ α ≤ 110° oder ≤ etwa 90 ° gebogen werden. Vorzugsweise wird er auf einen Winkel von 70 ° ≤ α ≤ 100 ° oder ≤ etwa 90°. Weiterhin vorzugsweise wird er auf einen Winkel von 85 ° ≤ α ≤ 95 ° oder ≤ etwa 90 ° gebogen. In einer bevorzugten Variante wird er auf einen Winkel von α ≅ 90 ° gebogen.

Der aus dem Vorformling geformte Behälter ist definiert durch eine Längsachse L, eine erste, senkrecht zu der Längsachse verlaufende Querachse B und eine zweite, senkrecht zu der ersten Querachse verlaufende Querachse T. In Richtung der Längsachse L wird die Höhe des Behälters definiert. In Richtung der ersten Querachse B wird die Breite des Behälters definiert. In Richtung der zweiten Querachse T wird die Tiefe des Behälters definiert. Die Seitenwände oder die Bereiche des Behälters, welche sich in Richtung der ersten Querachse B des Behälters erstrecke, sind länger als die Seitenwände oder die Bereiche des Behälters, welche sich entlang der zweiten Querachse T des Behälters erstrecken. Der Behälter ist somit breiter als tief. In einer Ausführungsform besitzt der aus dem Vorformling geformte Behälter einen Grundkörper, der zumindest einen im Wesentlichen ovalen oder elliptischen Querschnitt besitzt.

Steht der Hänger aufrecht, verläuft die Längsachse L_{H} des Hängers in Richtung der Längsachse L des Vorformlings und/oder des Behälters. Vorzugsweise liegt sie dann auf der Längsachse L des Vorformlings und/oder des Behälters. Dagegen liegt die Querachse Q_{H} des Hängers quer, vorzugsweise senkrecht, zu der Längsachse L Vorformlings und/oder des Behälters.

In einer Ausführungsform erhält der aus dem Vorformling geformte Behälter beim Strecken und Aufblasen einen Grundkörper, der eine Breite, welche sich entlang der ersten Querachse B des Behälters erstreckt, und eine Tiefe, welche sich entlang einer senkrecht zu der ersten Querachse B verlaufenden, zweiten Querachse T des Behälters erstreckt, besitzt, wobei die Breite größer als die Tiefe ist und der Vorformling vor dem Strecken und Aufblasen in der Streck- und Aufblasvorrichtung so ausgerichtet wird, dass die zweite Querachse T im Wesentlichen quer, vorzugsweise senkrecht zu der Bewegungsrichtung des Vorformlings angeordnet ist.

Insbesondere um die größere Erstreckung in der Breite zu erzielen, werden zwei gegenüberliegende Seiten oder Bereiche des Vorformlings, die dann die Breite des aus dem Vorformling geformten Behälters bereitstellen, stärker erwärmt als zwei gegenüberliegende Seiten oder Bereiche des Vorformlings, welche dann die Tiefe des aus dem Vorformling geformten Behälters bereitstellen.

Die unterschiedliche Erwärmung kann erzielt werden, indem der Vorformling über seinen Umfang im Wesentlichen gleichmäßig erwärmt wird und die gegenüberliegende Seitenwände oder Bereiche des Vorformlings, welche dann die Breite des aus dem Vorformling geformten Behälters bereitstellen, mit einer dünneren Wandstärke bereitgestellt werden als die zwei gegenüberliegenden Seiten, welche dann die Tiefe des aus dem Vorformling geformten Behälters bereitstellen.

In einer anderen Ausführungsform wird der Vorformling über seinen Umfang zumindest abschnittsweise mit einer im Wesentlichen gleichmäßigen Wandstärke bereitgestellt. Die unterschiedliche Erwärmung kann dann erzielt werden, indem der Vorformling über seinen Umfang im Wesentlichen nicht gleichmäßig erwärmt wird. Beispielsweise wird der Vorformling in der Heizeinrichtung über seinen Umfang zunächst im Wesentlichen gleichmäßig erwärmt. Danach werden die zwei gegenüberliegenden Seiten oder Bereiche des Vorformlings, welche dann die Breite des aus dem Vorformling geformten Behälters bereitstellen, vor dem Zuführen in die Streck- und Blaseinrichtung stärker erwärmt.

Dazu wird der Vorformling in einer Ausführungsform durch die Heizeinrichtung hindurch bewegt und zumindest in einem ersten Abschnitt der Heizeinrichtung über seinen Umfang gedreht. Vorzugsweise während der Vorformling durch die Heizeinrichtung hindurch bewegt wird, wird das Rotieren des Vorformling in der Heizeinrichtung gestoppt und der Vorformling so ausgerichtet, dass die Querachse Q_{H} des Hängers im Wesentlichen quer, vorzugsweise senkrecht, zu der Bewegungsrichtung des Vorformlings angeordnet ist. Die Seitenwände oder Bereiche des Vorformlings, welche stärker erwärmt werden, sind dadurch den Heizeinrichtungen zugewandt.

In einer weiteren Ausführungsform wird die Streck- und Aufblasvorrichtung mit einer Form bereitgestellt, welche an einer Unterseite zumindest abschnittsweise eine Erhebung aufweist, welche über einen Umfang zumindest abschnittweise oder vollständig mit einem Graben umgeben ist, wobei der erwärmte Vorformling zunächst so gestreckt wird, dass zumindest der Hängerund/oder der Boden des Vorformlings, insbesondere zumindest abschnittsweise, zur Anlage auf der Erhebung kommt bzw. kommen und der Vorformling dann so aufgeblasen wird, dass er zumindest abschnittsweise in dem Graben zur Anlage kommt und dort eine Mehrzahl an Standfüßen oder zumindest ein Standfuß geformt wird.

In einer konkreten Ausgestaltung wird der Verschluss als eine Verschlusskappe bereitgestellt. Insbesondere wird bzw. werden die Verschlusskappe und/oder die Einfüllöffnung des Behälters zumindest abschnittsweise erwärmt, wobei das Verschließen des Behälters erfolgt, indem die Verschlusskappe auf die Einfüllöffnung des Behälters aufgeschweißt wird. Vorzugsweise wird die Verschlusskappe mittels Spritzguss ("Injection moulding") hergestellt. Abschließend können noch die folgenden Verfahrensschritte an dem Behälter durchgeführt werden: Überprüfen des sterilisierten Behälters in einer Inspektionseinrichtung und/oder Aufbringen eines Etiketts auf den überprüften Behälter und/oder Anordnen einer Vielzahl an etikettierten Behältern in einem Karton und Verschließen des Kartons. Durch die ovale und nicht kreisförmige Grundform des Behälters kann eine hohe Packungsdichte erzielt werden. Beispielsweise umfasst das Überprüfen wenigstens eine, vorzugsweise kamerabasierte, visuelle Inspektion und/oder einen Dichtigkeitstest und/oder eine Füllstandmessung, vorzugsweise mittels Wiegen.

Die vorstehend beschriebenen erfindungsgemäßen Verfahrensschritte können auch umgesetzt werden durch entsprechende Einrichtungen, die ausgebildet oder geeignet sind zum Ausführen der beschriebenen Verfahrensschritte.

Beschrieben wird auch ein sterilisierter Behälter mit einem aus einem Vorformling gestreckten, aufgeblasenen und mit einer Infusionslösung befüllten Grundkörper, der nach oben über einen Schulterbereich in einen Flaschenhals mit einer Einfüllöffnung, welche mit einem Verschluss verschlossen ist, und nach unten in einen Bodenbereich übergeht, wobei der Grundkörper des sterilisierten Behälters eine Breite, die sich entlang einer ersten Querachse B des Behälters erstreckt, und eine Tiefe, die sich entlang einer senkrecht zu der ersten Querachse verlaufenden, zweiten Querachse T des Behälters erstreckt, besitzt. Der Behälter ist zudem dadurch definiert,, dass die Breite des Grundkörpers größer ist als die Tiefe des Grundkörpers und dass sich die Seitenwände des Grundkörpers, die sich in Richtung der Breite des Behälters erstrecken, zumindest abschnittsweise eine geringe Dicke aufweisen als die Seitenwände, welche sich entlang der Tiefe des Behälters erstrecken und dass an einer Unterseite des Behälters ein Hänger angeordnet ist, welcher einteilig mit dem Grundkörper des Behälters ist und dass eine Querachse Q_{H} des Hängers im Wesentlichen quer, vorzugsweise senkrecht, zu der ersten Querachse B des Behälters angeordnet ist, und der Hänger in Richtung auf die Unterseite des Behälters gebogen oder gelegt ist.

Die Wandstärke der langen Seiten des Behälters, welche die Breite des Behälters bereitstellen, ist zumindest abschnittsweise kleiner als die Wandstärke der kurzen Seiten des Behälters, welche die Tiefe des Behälters bereitstellen. Beispielsweise liegt die Wandstärke der langen Seiten des Behälters zumindest abschnittsweise in einem Bereich von etwa 0,1 mm bis etwa 1,5 mm und/oder liegt die Wandstärke der kurzen Seiten des Behälters zumindest abschnittsweise in einem Bereich von etwa 0,01 mm bis etwa 0,5 mm.

In einer ersten Ausführungsform umfasst der Behälter im Bereich der Seiten des Behälters, die sich in Richtung der zweiten Querachse erstrecken und die Tiefe des Behälters bereitstellen, jeweils einen, vorzugsweise bereits, gestreckten Formbereich. Vorzugsweise wurde dieser Formbereich in dem noch nicht sterilisierten Behälter jeweils als Wölbung bereitgestellt. Sie ist nach außen gewölbt oder gekrümmt. Die Wölbung kann sich entlang der Längsachse im Wesentlichen vollständig über den Grundkörper des Behälters erstrecken. Das sich bei dem Sterilisieren vergrößernde Innenvolumen des Behälters kann durch eine im Wesentlichen nicht elastische Streckung des Formbereichs kompensiert werden. Durch den gestreckten Formbereich kann der sterilisierte Behälter bei der Flüssigkeitsentnahme ein verbessertes Kollabierverhalten aufweisen.

In einer weiteren Ausführungsform des Behälters ist in dem Bodenbereich eine Vielzahl an Standfüßen ausgebildet. Sie sind um den Hänger herum angeordnet, wobei sich der Hänger in einem an der Unterseite des Behälters angelegten Zustand oberhalb einer Standfläche der Standfüße befindet. Vorzugsweise sind in dem Bodenbereich vier Standfüße ausgebildet welche zumindest abschnittweise gekrümmt sind und sich jeweils über eine Ecke des Standbodens erstrecken. Dadurch kann die Standfestigkeit des Behälters verbessert werden.

In einer weiteren Ausführungsform sind im Bereich des Flaschenhalses ein oberer erster Flansch, insbesondere zum Führen des Verschlusses beim Aufsetzen auf den Flaschenhals, und ein zweiter unterer Flansch, welcher einen gegenüber dem ersten Flansch größeren Durchmesser aufweist, zum Verbinden der Verschlusses mit dem Behälter bereitgestellt. Dadurch kann das Aufsetzen und Verbinden des Verschlusses unterstützt werden.
Vorzugsweise sind im Bereich des Flaschenhalses zwischen dem ersten Flansch und dem zweiten Flansch eine obere erste Vertiefung und unterhalb der ersten Vertiefung eine zweite Vertiefung, mittels derer der Behälter gegriffen und/oder übergeben werden kann, bereitgestellt. Dadurch kann das Handling des noch nicht verschlossenen und/oder des verschlossenen Behälters, beispielsweise mittels eines Greifers, vereinfacht werden.

Beschrieben wird auch ein Vorformling zur Herstellung des vorstehend beschriebenen erfindungsgemäßen Behälters. Vorzugsweise wird der Vorformling mittels Spritzguss ("Injection moulding") hergestellt. Dieser umfasst einen oberen ersten Abschnitt zum Bereitstellen des Flaschenhalses in dem aus dem Vorformling mittels Strecken und Blasen geformten Behälter; einen sich nach unten anschließenden zweiten Abschnitt zum Bereitstellen des Schulterbereichs in dem aus dem Vorformling mittels Strecken und Blasen geformten Behälter; einen sich nach unten anschließenden dritten Abschnitt zum Bereitstellen des Grundkörpers in dem aus dem Vorformling mittels Strecken und Blasen geformten Behälter; einen sich nach unten anschließenden vierten Abschnitt zum Bereitstellen des Bodenbereichs in dem aus dem Vorformling mittels Strecken und Blasen geformten Behälter; und einen sich nach unten anschließenden als Hänger ausgebildeten fünften Abschnitt zum Bereitstellen des Hängers in dem aus dem Vorformling mittels Strecken und Blasen geformten Behälter. In einer ersten Ausgestaltung weist der erste Abschnitt und/oder weist der vierte Abschnitt eine geringere Wandstärke auf als der Grundkörper. Dadurch kann das Strecken und Aufblasen eines Behälters, insbesondere einer Flasche, mit einem nicht rotationssymmetrischen Grundkörper unterstützt werden.

In einer weiteren Ausführungsform des Vorformlings ist zwischen dem vierten Abschnitt und dem Hänger als fünften Abschnitt ein verrundeter oder zumindest abschnittsweise verrundeter Übergangsbereich ausgebildet. In einer konkreten Ausgestaltung ist die Verrundung oder die Krümmung an zwei gegenüberliegenden Seiten des Übergangsbereichs ausgebildet. Vorzugsweise ist die Verrundung an den beiden Seiten des Übergangsbereichs ausgebildet, die sich in Richtung der Gelenkachse des Hängers erstrecken. Dadurch kann die Beweglichkeit des Hängers verbessert werden, ohne die Festigkeit der Verbindung zu dem Bodenbereich des Behälters wesentlich zu beeinträchtigen. In einer weiteren Ausgestaltung sind noch zwei seitliche Einkerbungen vorhanden. Vorzugsweise sind diese seitlichen Einkerbungen zumindest an ihrem jeweiligen Scheitelpunkt verrundet. In einer weiteren Ausgestaltung besitzt der Hänger entlang seiner Querachse eine Breite, welche ausgehend von dem Übergang entlang der Längsachse des Hängers zunächst zunehmend und dann wieder abnehmend ist. Dadurch werden zum einen der erforderliche Übergang und zum anderen eine ausreichend große Anschlagfläche für die Biegeeinrichtung zum Umlegen des Hängers bereitgestellt. Vorzugsweise sind die hier am Vorformling genannten Merkmale des Hängers im Wesentlichen auch an dem sterilisierten Behälter vorhanden.

Das erfindungsgemäße Verfahren ist insbesondere ausführbar mittels der erfindungsgemäßen Anlage. Die erfindungsgemäße Anlage ist insbesondere ausgebildet zur Ausführung des erfindungsgemäßen Verfahrens. Der erfindungsgemäße sterilisierte Behälter ist insbesondere herstellbar oder hergestellt mit dem erfindungsgemäßen Verfahren. Der erfindungsgemäße sterilisierte Behälter ist insbesondere herstellbar oder hergestellt aus dem erfindungsgemäßen Vorformling.

Der Behälter kann zum Beispiel ein Fassungsvermögen von etwa 100 ml bis etwa 1000 ml besitzen. Die Anlage und/oder das Verfahren und/oder der sterilisierte Behälter gemäß der vorliegenden Erfindung kann bzw. können insbesondere für Infusionslösungen oder auch allgemein für medizinische Flüssigkeiten eingesetzt werden. Die medizinische Flüssigkeit ist eine Flüssigkeit, welche für medizinische Zwecke zum Einsatz kommt. In einer bevorzugten Ausführungsform ist die medizinische Flüssigkeit eine Infusionslösung. Mögliche Beispiele für solche Infusionslösungen umfassen steriles Wasser; Salzlösungen; insbesondere Lösungen mit NaCl-, KCl-, CaCI- und/oder Mg; Lösungen mit Kohlenwasserstoffen, insbesondere Glukose-Lösungen; Lösungen mit Nährstoffen für die parenterale Ernährung und/oder Kolloid-Lösungen, insbesondere für die Blutersatztherapie (z.B. Voluven).

In einer bevorzugten Ausführungsform der Erfindung ist der Behälter eine Flasche, insbesondere eine Kunststoffflasche. Die Flasche umfasst den Hänger, einen Bodenbereich, einen Grundkörper oder Flaschenkörper, einen Schulterbereich und einen Flaschenhals.

In einer bevorzugten Ausführungsform ist oder umfasst das Material für den Vorformling und/oder die Verschlusskappe Polypropylen. Vorzugsweise ist das Polypropylen hergestellt gemäß Ph. Eur. 3.1.6 (EUROPEAN PHARMACOPOEIA). Dieses Material ist sterilisierbar bei 121 °C. Zudem kann das Material sowohl in einem Spritzgussverfahren als auch in einem Streckblasformverfahren eingesetzt werden. Ferner weist dieses Material eine gute Gas-und Wasserundurchlässigkeit auf.

Darüber hinaus besitzt einer mit einer klaren Flüssigkeit, vorzugsweise mit einer klaren Infusionslösung, befüllte und sterilisierte Behälter eine hervorragende, glasähnliche Transparenz, insbesondere in seinem Mantelbereich oder Flaschenbauch. Wenn der Behälter mit seiner breiten Seite zum Beispiel auf eine mit Buchtstaben bedruckte Seite aufgelegt wird, können die Buchstaben im Wesentlichen problemlos durch den Behälter hindurch erkannt werden. Während der Vorformling im Wesentlichen lichtdurchlässig, aber nicht transparent ist, besitzt, werden dem Behälter durch das Strecken die transparenten Eigenschaften verliehen. Die Seitenwände, welche die Breite des Behälters bereitstellen, besitzen zumindest abschnittsweise eine bessere Transparenz als die Seitenwände, welche die Tiefe des Behälters bereitstellen. Denn sie werden stärker bzw. weiter gestreckt. Zudem erhält der Behälter durch die stärkere Streckung gute Kollabiereigenschaften bei der Flüssigkeitsentnahme. Insbesondere der Flaschenhals und/oder der Schulterbereich und/oder der Bodenbereich besitzen, da sie nicht oder nicht in dem Maße gestreckt und aufgeblasen werden wie der Flaschenkörper, eine höhere Wandstärke und dadurch eine geringere Transparenz.

Die vorliegende Erfindung wird anhand der nachfolgenden Ausführungsbeispiele im Einzelnen erläutert. Hierzu wird auf die beigefügten Zeichnungen mit den schematischen Darstellungen Bezug genommen. Die gleichen Bezugszeichen in den einzelnen Zeichnungen beziehen sich auf die gleichen Teile.
Fig. 1 zeigt eine Ausführungsform des erfindungsgemäßen Verfahrens und der erfindungsgemäßen Anlage in einem Blockdiagramm;
Fig. 2.a und 2.b zeigen eine Ausführungsform des Erwärmens und Ausrichtens des Vorformlings, des Umlegens des Hängers am Vorformling und des Zuführens des Vorformlings in die Form zum Strecken und Aufblasen in einer schematischen Darstellung in einer Aufsicht auf die Anlage (Fig. 2.a) und in einer Seitenansicht (Fig. 2.b);
Fig. 3.a bis 3.c zeigen eine Ausführungsform einer erfindungsgemäßen Form zum Strecken und Aufblasen mit eingesetztem Vorformling (Fig. 3.a), mit eingeführter Recklanze und gerecktem bzw. gestrecktem Vorformling (Fig. 3.b) und mit aus dem Vorformling aufgeblasenem Behälter (Fig. 3.c) in einer schematischen Darstellung;
Fig. 4.a und 4.b zeigen eine Ausführungsform eines erfindungsgemäßen Vorformlings in einer Seitenansicht (Fig. 4.a) und in einem Querschnitt (Fig. 4.b);
Fig. 5.a bis 5.f zeigen eine Ausführungsform eines erfindungsgemäßen noch nicht befüllten Behälters in einer perspektivischen Ansicht auf die Unterseite (Fig. 5.a) und auf die Oberseite (Fig. 5.b), in einer Aufsicht auf die Unterseite (Fig. 5.c) und die Oberseite (Fig. 5.d), in einer Seitenansicht auf die kurze Seite des Behälters bzw. seine Tiefe (Fig. 5.e) und auf die lange Seite des Behälters bzw. seine Breite (Fig. 5.f);
Fig. 6.a und 6.b zeigen eine Ausführungsform einer erfindungsgemäßen Kappe zum Verschließen des Behälters in einer perspektivischen Ansicht (Fig. 6.a) und in einem Querschnitt (Fig. 6.b) und
Fig. 7.a und 7.b zeigen eine Ausführungsform eines erfindungsgemäßen mit einer Infusionslösungen befüllten Behälters vor (Fig. 7.a) und nach dem Sterilisieren (Fig. 7.b).

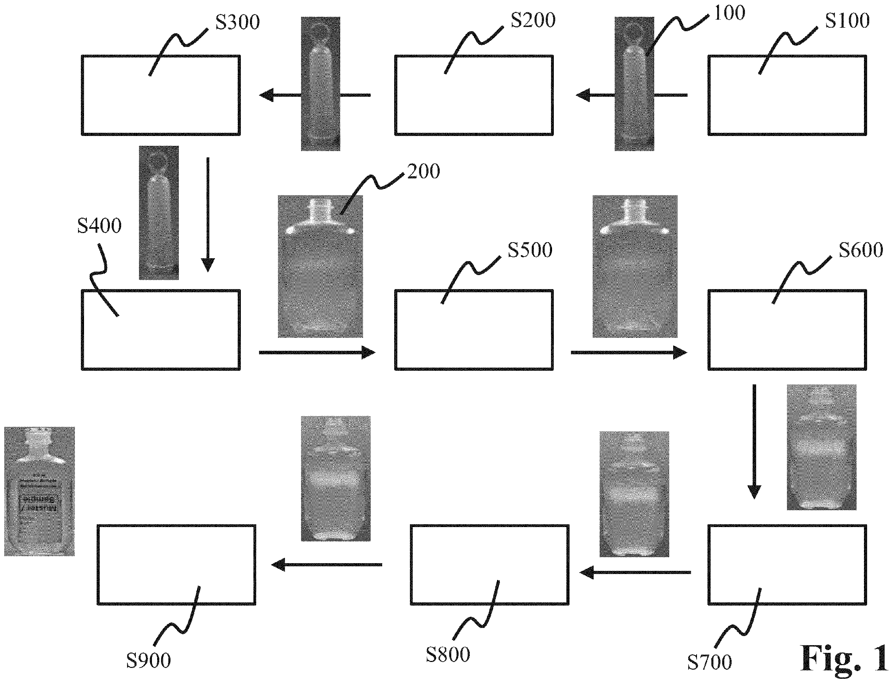

Zunächst gibt Figur 1 einen Überblick über das Verfahren und eine zugehörige Anlage zur Herstellung eines mit einer Infusionslösung befüllten Behälters 200. Der Behälter 200 ist hier als eine Flasche ausgeführt. In einem ersten Schritt S100 werden die Vorformlinge 100 bereitgestellt. Dies erfolgt durch eine Einrichtung zum Bereitstellen eines Vorformlings 100. Ein Beispiel für eine solche Vorrichtung ist ein Roboterarm mit einem Greifer. Die Vorformlinge 100 weisen an ihrem Boden jeweils einen Hänger 150 auf.

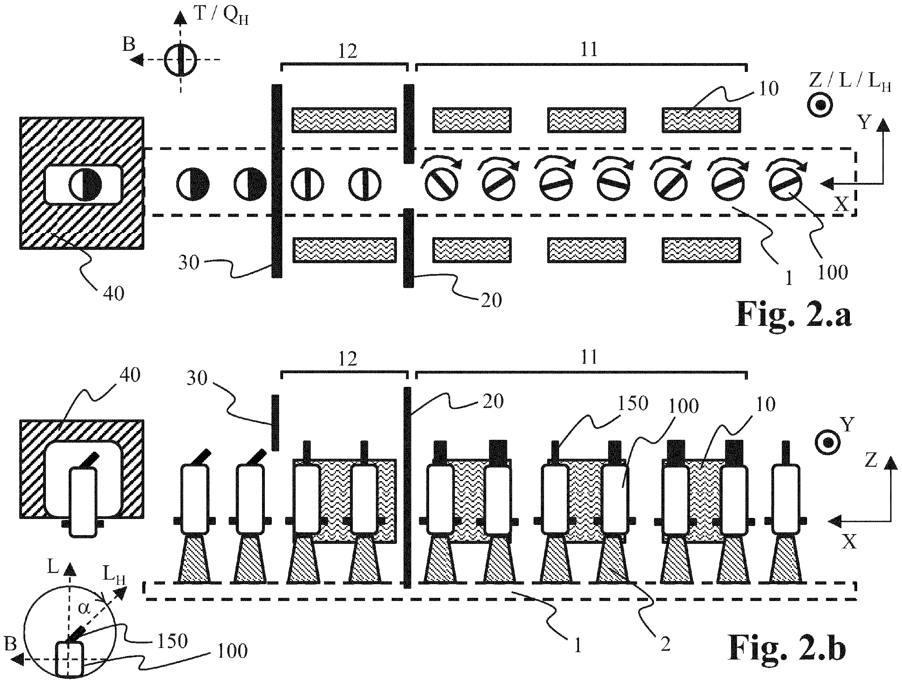

In einem nächsten Schritt S200 erfolgt das Erwärmen der Vorformlinge 100 in einer Heizeinrichtung 10. Die Heizeinrichtung 10 kann beispielsweise durch eine, vorzugsweise elektrische, Strahlungsheizung bereitgestellt werden. Die Vorformlinge 100 werden zunächst so beheizt, dass jeder Vorformling 100 im Wesentlichen gleichmäßig erwärmt ist oder wird. Danach erfolgt eine bevorzugte Beheizung einzelner Teilbereiche der Vorformlinge 100. Die Beheizung ist derart, dass die Vorformlinge 100 danach nicht mehr gleichmäßig erwärmt sind und sich beim anschließenden Strecken und Aufblasen unterschiedlich ausdehnen können. Vor der bevorzugten Beheizung müssen die Vorformlinge 100 noch entsprechend der Orientierung der Hänger 150 ausgerichtet werden. In einem nächsten Schritt S300 werden die Hänger 150 der Vorformlinge 100 umgebogen durch eine Biegevorrichtung 30. Die Details zu den Schritten S200 und S300 sind in der Beschreibung zu den Figuren 2.a und 2.b angegeben.

Die erwärmten Vorformlinge 100 werden einer Streck- und Aufblasvorrichtung 40 zugeführt (Englisch: Strech-Blow-Moulding). In einem Schritt S400 werden durch ein Strecken und Aufblasen der Vorformlinge 100 die Behälter 200 geformt. In einem nächsten Schritt S500 erfolgen ein Reinigen der geformten Behälter 200, zum Beispiel in einer Spülvorrichtung, und gegebenenfalls ein Trocknen der gereinigten Behälter, zum Beispiel mittels einer Luftströmung und/oder mittels Wärme.

Das Befüllen der gereinigten und gegebenenfalls getrockneten Behälter 200 mit einer Infusionslösung erfolgt in einem nächsten Schritt S600. Das Befüllen erfolgt über eine in dem Behälter 200 vorhandene Einfüllöffnung 115, hier über einen geöffneten Flaschenhals 210, in einer Füllanlage. Die befüllten Behälter 200 werden dann verschlossen (Schritt S700), beispielsweise durch Aufbringen einer Verschlusskappe 300 auf die Einfüllöffnung 211 des Behälters 200. In einem nächsten Schritt S800 werden die verschlossenen Behälter 200 zum Beispiel in einem Autoklaven sterilisiert. Nach der Sterilisierung sind die Behälter 200 und darin enthalten Flüssigkeiten insbesondere geeignet für Infusionsanwendungen.

Abschließend erfolgen noch ein Überprüfen des sterilisierten Behälters 200 in einer Inspektionseinrichtung, ein Etikettieren der Behälter 200, das Anordnen der etikettierten Behälter 200 in einem Karton und/oder das Verschließen des Kartons. Dies ist zusammengefasst in dem Schritt S900. Das Überprüfen umfasst zum Beispiel eine visuelle Inspektion, vorzugsweise mittels einer Kamera, einen Dichtigkeitstest, vorzugsweise mittels einer Druckmanschette, und/oder eine Füllstandmessung, vorzugsweise mittels einer Waage.

Transportvorrichtungen zum Übergeben des Vorformlings 100 und/oder des leeren Behälters 200 und/oder des befüllten Behälters 200 und/oder des verschlossenen Behälters 200 und/oder des sterilisierten Behälters 200 sind in den Figuren nicht dargestellt. Solche Transportvorrichtungen können zum Beispiel in der Gestalt eines Roboterarms mit Greifer und/oder eines Förderbands mit Halterungen und/oder eines Rundläufers mit Greifelementen vorliegen. Nur in den nachfolgenden Figuren 2.a und 2.b ist eine erste Transportvorrichtung 1 dargestellt.

Die Figuren 2.a und 2.b zeigen eine Ausführungsform für das Erwärmen und das Ausrichten des Vorformlings 100, das Umlegen des Hängers 150 am Vorformling 100 und das Zuführen des Vorformlings 100 in die Form 40 zum Strecken und Aufblasen. Die Vorformlinge 100 können bereits beim Bereitstellen ausgerichtet werden. Hier erfolgt das Ausrichten der Vorformlinge 100 beispielhaft erst beim Beheizen in der Heizeinrichtung 10.

Die Vorformlinge 100 werden auf einer ersten Transporteinrichtung 1 durch die Heizeinrichtung 10 bewegt und der Streck- und Aufblasvorrichtung 40 zugeführt. Die Bewegungsrichtung der ersten Transporteinrichtung 1 ist mit der X-Achse bezeichnet und liegt in der Blattebene. Die Y-Achse liegt senkrecht zu der X-Achse in der Blattebene und somit senkrecht zur Bewegungsrichtung X der Vorformlinge 100. Die Z-Achse steht senkrecht auf der XY-Ebene und somit auf der Blattebene. Die Vorform linge 100 sind so angeordnet, dass sich deren Längsachsen L entlang der Z-Achse erstrecken. Die Vorform linge 100 bzw. die Hänger 150 der Vorform linge 100 werden vor dem Umbiegen des Hängers 150 in Richtung der Y-Achse ausgerichtet (siehe dazu nachfolgend im Text).

Die erste Transporteinrichtung 1 kann, wie dargestellt, eine Art Förderband oder auch ein Rundläufer sein, das bzw. der auf einen Seite (hier rechts dargestellt) die Vorformlinge 100 aufnimmt und der Aufblas- und Streckvorrichtung 40 zuführt. Nach der Übergabe der erwärmten Vorformlinge 100 läuft sie wieder zurück, um weitere Vorformlinge 100 aufzunehmen. Dies ist in den Figuren jedoch nicht dargestellt.

Die erste Transporteinrichtung 1 weist eine Vielzahl an in Drehstiften 2 auf, die über die Bewegung der ersten Transporteinrichtung 1 in X-Richtung bewegt werden. Auf einem Drehstift 2 ist jeweils ein Vorformling 100 drehbar lagerbar oder gelagert. Entlang der ersten Transporteinrichtung 1 ist eine Vielzahl an Heizeinrichtungen 10 angeordnet. Diese sind hier beispielhaft paarweise und gegenüberliegend angeordnet. Anstelle von zwei gegenüberliegenden Heizeinrichtungen 10 können auch insbesondere jeweils eine Heizeinrichtung und ein gegenüberliegender Reflektor eingesetzt werden.

In einem ersten Abschnitt 11 der Heizeinrichtung 10 werden die Vorformlinge 100 über eine Drehung der Drehstifte 2, vorzugsweise durchgehend, gedreht. Dadurch werden die Vorformlinge 100 in diesem ersten Abschnitt 11 der Heizeinrichtung 10 zunächst im Wesentlichen gleichmäßig erwärmt.

In einem zweiten Abschnitt 12 der Heizeinrichtung 10 unterbleibt eine Drehung der Vorformlinge 100. Bevor die Vorformlinge 100 jedoch diesem zweiten Abschnitt 12 der Heizeinrichtung 10 zugeführt werden, werden diese ausgerichtet. Sie werden hier ausgerichtet über eine entsprechende Ausrichtung der Drehstifte 2. Die Vorformlinge 100 werden so ausgerichtet, dass die Querachse Q_{H} der Hänger 150 quer, vorzugsweise senkrecht, zur Bewegungsrichtung X der ersten Transporteinrichtung 1 angeordnet sind. Die Kontrolle und eine gegebenenfalls erforderliche Korrektur durch ein Nachregeln der Drehstiftorientierung erfolgt durch ein, beispielsweise optisches, Überwachungssystem 20.

In dem zweiten Abschnitt 12 der Heizeinrichtung 10, werden nun die Bereiche der Vorformlinge 100, welche den seitlich angeordneten Heizeinrichtungen 10 zugeordnet sind, stärker erwärmt als die senkrecht dazu angeordneten Bereiche. Die Seitenwände der Vorformlinge sind nun ungleichmäßig erwärmt oder warm. Im Detail sind die Bereiche der Vorform linge 100 stärker erwärmt, welche sich entlang der ersten Querachse B des Vorformlings erstrecken. Die wärmeren und damit auch weicheren Bereiche bilden später die langen Seiten des geformten Behälters 200, nämlich seine Breite. Die kälteren und damit auch weniger weichen Bereiche bilden später die kurzen Seiten des geformten Behälters 200, nämlich seine Tiefe.

In einem nachfolgenden Schritt werden die Hänger 150 der ausgerichteten und nun ungleichmäßig erwärmten Vorformlinge 100 umgebogen oder umgelegt.

Dazu ist eine Biegevorrichtung 30 vorgesehen. Die Biegevorrichtung 30 wird hier durch eine vor der der Streck- und Aufblasvorrichtung 40 angeordnete Kante bereitgestellt. Die Kante 30 ist vorzugsweise ortsfest und seitlich versetzt gegenüber der ersten Transporteinrichtung 1 so angeordnet ist, dass die Hänger 150 der Vorformlinge 100 durch die Bewegung der ersten Transporteinrichtung 1 gegen die Kante 40 bewegt, dort zur Anlage gebracht und umgebogen werden. In Bewegungsrichtung X gesehen überlappen sich die Kante 40 und der Hänger 150 zumindest abschnittsweise. Die Biegevorrichtung 30 ragt sozusagen in die Bewegungsbahn der Hänger 150 hinein. Vorzugsweise werden die Hänger 150 in Bezug auf die Längsachse L der Vorformlinge auf einen Winkel von etwa 85° ≤ α ≤ etwa 90° oder von α ≅ 90° oder α = 90° gebogen (siehe dazu den ergänzten Zoom links unten). Die nun ausgerichteten und ungleichmäßig erwärmten Vorformlinge werden nun an die Streck- und Aufblasvorrichtung 40 übergeben.

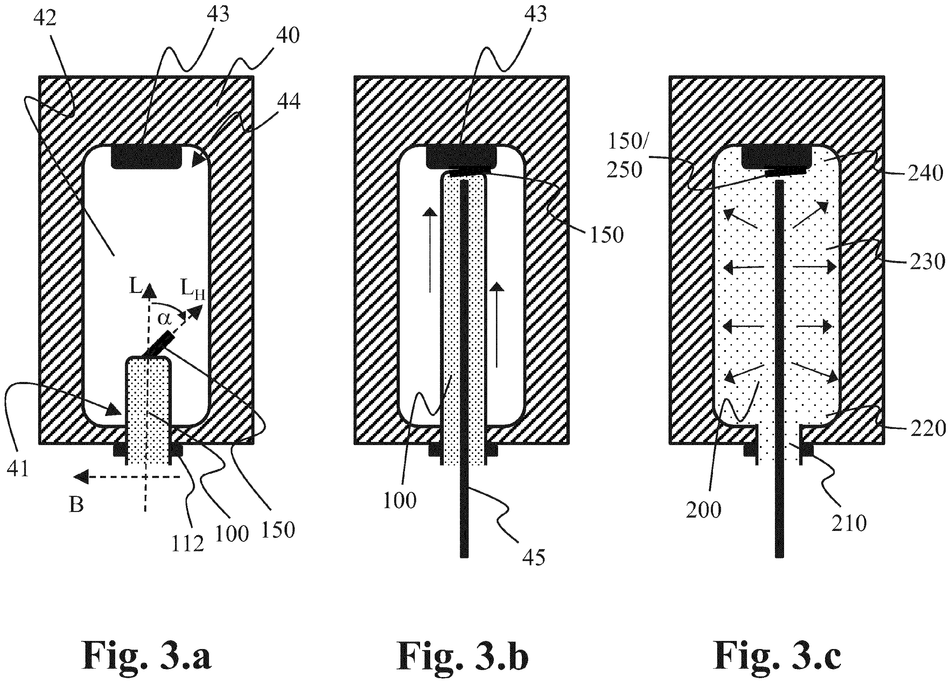

Die Figuren 3.a bis 3.c illustrieren den Vorgang des Streckens und Aufblasens eines Vorformlings 100 im Detail. Der Vorformling 100 wird über eine Öffnung 41 in die Form 42 eingeführt. Mit dem zweiten Flansch 112 kommt der Vorformling 100 zur Auflage an dem Rand der Öffnung 41 (siehe Figur 3.a). Der Vorformling 100 ist so in die Form eingebracht, dass die stärker erwärmten Seiten zur langen Seite der Form 42 hin ausgerichtet sind. Die Querachse Q_{H} des Hängers 150 liegt quer zu der langen Seite der Form 42. Die lange Seite ist hier in der Blattebene dargestellt.

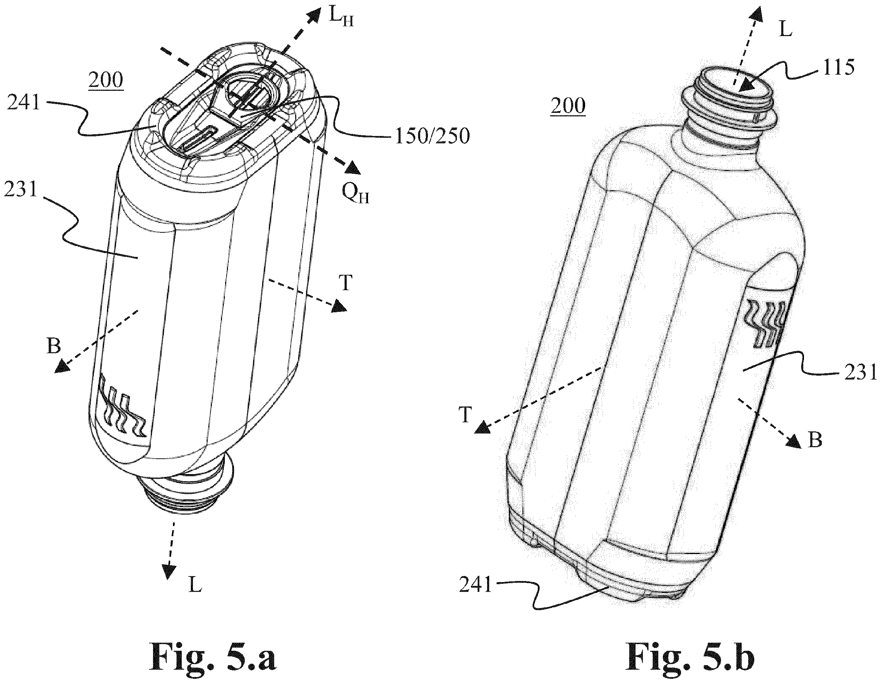

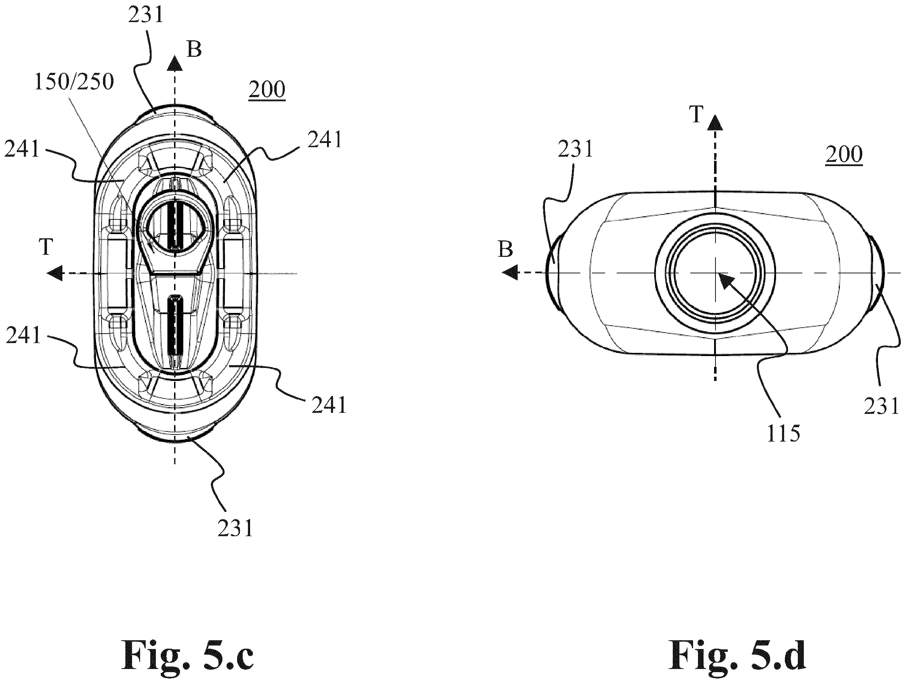

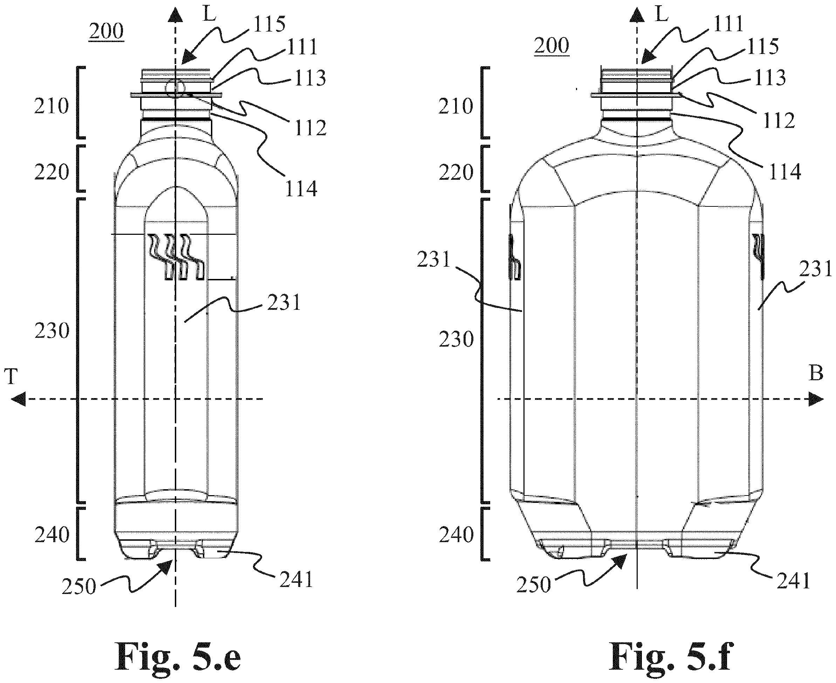

Die Form 42 ist an ihrer Unterseite nicht eben ausgebildet. Sie besitzt in etwa mittig eine Erhebung 43 oder eine Art Tisch 43. Über den Umfang der Erhebung 43 erstreckt sich eine Art Graben 44. Der Graben weist Strukturen auf, die die Ausbildung der Füße 241 des Behälters 200 ermöglichen. Die Form 42 insgesamt ist oder kann im Wesentlichen ein Negativ des Behälters 200 sein. Insbesondere aber die Unterseite der Form 42 ist im Wesentlichen ein Negativ der Unterseite des, vorzugsweise noch nicht sterilisierten, Behälters 200 (siehe dazu die Figuren 5.a bis 5.f). Vorzugsweise sind die Wände der Form 42 nicht aktiv beheizt. Sie sind sozusagen kalt.

Es wird eine Lanze 45 eingeführt, welche den Vorformling 100 entlang seiner Längsachse L streckt (siehe Figur 3.b). Der Vorformling 100 wird dabei soweit gestreckt, bis der Hänger 150 und/oder zumindest ein Abschnitt der Unterseite 140 des Vorformlings 100 auf der Erhebung 43 zur Auflage kommen. Durch den Kontakt mit der kalten Auflage 43 kühlt der Bodenbereich 140 des Vorformlings 100 ab und kann im Wesentlichen nicht mehr aufgeblasen werden. Die Unterseite 140 der Vorformlings 100 und später des geformten Behälters 200 ist somit dicker als die Seitenwände des Behältergrundkörpers 230. Da der Hänger 150 vorab entsprechend umgelegt ist, kommt dieser definiert zur Auflage auf der Erhebung 43 der Form 42 und auf der Unterseite 140 des Vorformlings 100. Insbesondere kann der Hänger 100 leicht lösbar mit der Unterseite 140 des Vorformlings 100 verkleben. Er kann aber nicht mehr wesentlich in Kontakt treten mit dem aufzublasenden Grundkörper 230 des Behälters 200.

In einem nächsten Schritt wird der gestreckte Vorformling 100 aufgeblasen (siehe Figur 3.c). Die erwärmten Wände des Vorformlings 100 dehnen sich aus, kommen zur Anlage an die kalte Wand der Form 42 und erstarren. Sie kommen auch zur Anlage in dem Graben 44, der die Erhebung 43 in der Form 42 umgibt, erstarren dort und bilden unter anderem die Füße 241 des Behälters 200 aus. Die Wände oder Bereiche des Vorformlings 100, welche stärker erwärmt und somit weicher sind, dehnen sich beim Aufblasen stärker aus als die anderen weniger stark erwärmten Wände oder Bereiche des Vorformlings 100. Diese bilden die zwei langen Seiten und damit die Breite B des Behälters 200. Da diese zwei Seiten stärker gedehnt werden, besitzen diese, ausgehend von einem Vorformling 100 mit einer im Wesentlichen gleichen Wandstärke, eine geringe Dicke als die anderen beiden Seiten, welche die kurzen Seiten und somit die Tiefe T des Behälters 200 bereitstellen. Nach dem Aufblasen kann die Form 42 geöffnet, der geformte Behälter 200 entnommen und den weiteren Schritten zugeführt werden (siehe dazu die vorstehende Beschreibung zu Figur 1).

In den nachfolgenden Figuren 3.a bis 7 werden die einzelnen Bauteile konkret beschrieben.

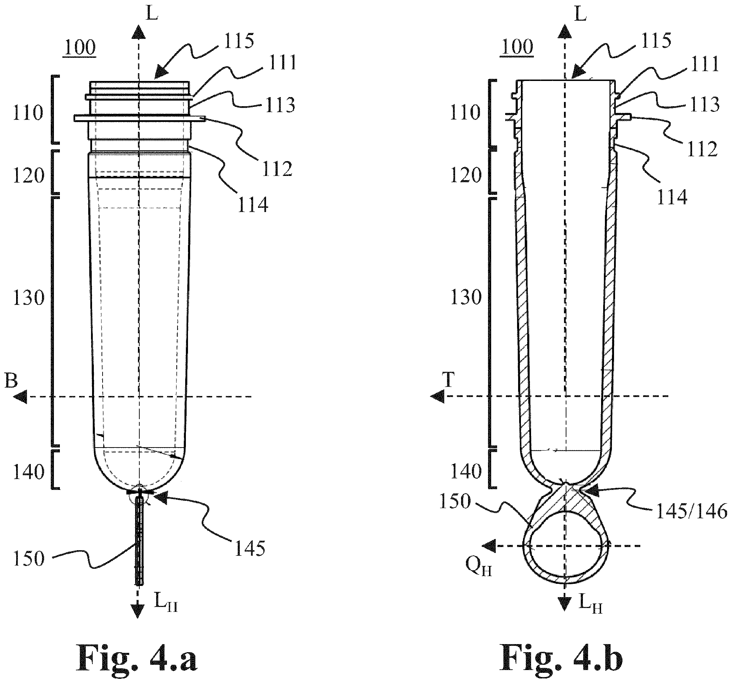

Als Ausgangspunkt ist in den Figuren 4.a und 4.b ein Vorformling 100 dargestellt. Der Vorformling 100 ist ein zur Oberseite hin geöffneter Körper. An der Unterseite des Vorformlings 100 ist der Hänger 150 angeordnet. Der Vorformling 100 und der Hänger 150 sind einteilig ausgebildet. Sie werden als ein Körper mittels Spritzguss hergestellt. Vorzugsweise ist der Vorformling 100, unter Vernachlässigung des Hängers 150, ein im Wesentlichen rotationsymmetrischer Körper. Ein solcher Körper lässt sich mittels Spritzguss recht einfach und somit kostengünstig herstellen. Der dargestellte Vorformling 100 umfasst in dieser Ausführungsform im Wesentlichen fünf Bereiche.

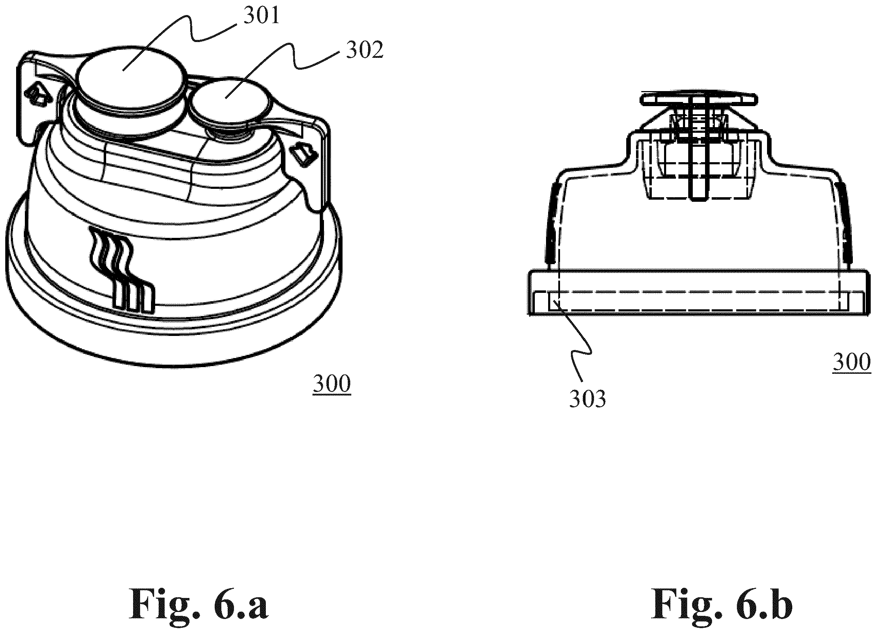

Einen oberen, die Öffnung 115 umfassenden, ersten Bereich 110, der dann den Behälter- oder Flaschenhals 210 bildet. Dieser Bereich wird im Wesentlichen nicht aufgeblasen. Er behält im Wesentlichen seine ursprüngliche Wandstärke. Die Öffnung 115 bildet die Einlassöffnung oder Öffnung in dem Flaschenhals 210 des aus dem Vorformling 100 zu formenden Behälters 200. Die Öffnung 115 hat einen Durchmesser von etwa 12 mm bis etwa 38 mm. Unterhalb der Öffnung 115 sind ein erster Flansch 111 und ein zweiter Flansch 112 angeordnet. Zwischen den beiden Flanschen 111 und 112 wird dadurch eine erste Vertiefung 113 erzeugt. Der zur Unterseite hin liegende zweite Flansch 112 ist breiter als der obere erste Flansch 112. Der zweite Flansch 112 dient zum Auflegen auf die Form 42 beim Strecken und Aufblasen. Zudem dient der zweite Flansch 112 als Anlagefläche zum Verschweißen mit einer Verschlusskappe 300 (siehe dazu die Beschreibung zu den Figuren 6.a und 6.b). Unterhalb des zweiten Flanschs 112 befindet sich in der Außenseite des Vorformlings 100 noch eine zweite Vertiefung 114. Die beiden Vertiefungen 113 und 114 werden im Wesentlichen nicht gestreckt und aufgeblasen. Denn sie sind dann im Bereich des Flaschenhalses 210 angeordnet. Die erste und die zweite Vertiefung 113 und 114 vereinfachen die Handhabung des Vorformlings 100 und des geformten Behälters 200. Zum Beispiel kann ein Greifer den Vorformling 100 über die erste Vertiefung 113 sicher halten und an einen zweiten Greifer übergeben, welcher den Vorformling 100 über die zweite Vertiefung 114 festhalten und übernehmen kann. Die Wandstärke liegt hier zum Beispiel in einem Bereich von etwa 1 mm bis etwa 4 mm. Die Länge des ersten Bereichs 110 in Richtung der Mittelachse L beträgt etwa 20 mm bis etwa 30 mm. Sie ist im Wesentlichen unabhängig von der Gesamtgröße des Vorformlings 100.

Weiterhin umfasst der Vorformling 100 einen zur Unterseite hin anschließenden zweiten Bereich 120, der dann den Schulterbereich 220 des Behälters 200 bildet. Dieser Bereich wird zumindest teilweise aufgeblasen. Der Schulterbereich 220 des geformten Behälters 200 besitzt dann eine von dem Flaschenhals 210 zum dritten Bereich 220 hin zumindest abschnittweise abnehmende Wandstärke. Die Wandstärke des Vorformlings 100 ist in dem zweiten Bereich 120 zunehmend von der Wandstärke im ersten Bereich 100 zur Wandstärke im dritten Bereich 130. Die Länge des zweiten Bereichs 120 in Richtung der Mittelachse L beträgt etwa 5 mm bis etwa 10 mm. Die Länge ist im Wesentlichen unabhängig von der Gesamtgröße des Vorformlings 100.

Zur Unterseite hin schließt sich der dritte Bereich 130 an, welcher dann den Grundkörper 230 des Behälters 200 bildet. Dieser dritte Bereich 130 wird dazu im Wesentlichen vollständig aufgeblasen. Dieser besitzt dann die dünnste Wandstärke in dem geformten Behälter 200. Diese ist jedoch nicht gleichmäßig, da der Vorformling 100 unterschiedlich stark erwärmt wird und dadurch beim Aufblasen dann unterschiedlich stark gedehnt wird (siehe dazu die Beschreibung zu den Figuren 3.a bis 3.c). Die Wandstärke hier im dritten Bereich 130 des Vorformlings 100 ist größer als die Wandstärke im ersten Bereich 110. Die Wandstärke des Vorformlings 100 ist in dem dritten Bereich 130 über seinen Umfang und in der Höhe im Wesentlichen konstant. Sie liegt hier zum Beispiel in einem Bereich von etwa 2 mm bis etwa 3,5 mm. Der Vorformling selbst hat in diesem Abschnitt einen sich verjüngenden Querschnitt. Die Länge des dritten Bereichs 130 in Richtung der Mittelachse L beträgt etwa 80 mm bis etwa 250 mm. Die Länge des dritten Bereichs 130 wird in Abhängigkeit von der Größe des zu formenden Behälters 200 gewählt. Mit diesem Längenbereich können Behälter 200 hergestellt werden mit einem Aufnahmevolumen von etwa 100 ml bis etwa 1000 ml.

Ferner schließt zur Unterseite hin noch der vierte Bereich 140 an, welcher dann den Bodenbereich 240 des Behälters 200 bildet. Dieser vierte Bereich 140 wird zumindest teilweise aufgeblasen. Der Bodenbereich 240 des geformten Behälters 200 besitzt eine von dem Grundkörper 230 zur Unterseite 240 hin zumindest abschnittweise zunehmende Wandstärke. Die Wandstärke des Vorformlings 100 ist kleiner als die Wandstärke im dritten Bereich 130. Sie liegt hier zum Beispiel in einem Bereich von etwa 1 mm bis etwa 2 mm. Die Länge des vierten Bereichs 140 in der Richtung der Mittelachse L beträgt etwa 15 mm bis etwa 30 mm. Die Länge ist im Wesentlichen unabhängig von der Gesamtgröße des Vorformlings 100.

An dem Bodenbereich 140 oder an der Unterseite des Vorformlings 100 ist der Hänger 150 angeordnet. Der Hänger 150 bildet den fünften Bereich 150. Der Hänger 150 ist beispielhaft ein geschlossener Hänger. Er wird nicht aufgeblasen. Seine Wandstärke liegt zum Beispiel in einem Bereich von 1 mm bis 3 mm. Der Hänger 150 ist über einen Übergangsbereich 145 mit dem Boden 140 oder der Unterseite 140 des Vorformlings 100 und später des geformten Behälters 200 verbunden. Der Übergangsbereich 145 hat eine kleinere Wandstärke. Sie liegt hier zum Beispiel in einem Bereich von etwa 0,3 mm bis etwa 1,5 mm. Der Übergangsbereich 145 ist biegsam. Der Hänger 150 ist somit schwenkbar oder biegbar angeordnet. Der Übergangsbereich 145 stellt eine Art Folienscharnier bereit. Vorzugsweise ist der Übergang 145 entlang der Achse Q_{H} an den beiden Seiten verrundet. Um die Beweglichkeit des Hängers 150 noch zu verbessern, werden zwei seitliche Einkerbungen 146 bereitgestellt. Vorzugsweise sind diese seitlichen Einkerbungen 146 an ihrem jeweiligen Scheitelpunkt verrrundet (siehe Figur 4.b). Dadurch kann insbesondere die Biegsamkeit des Hängers 150 noch weiter verbessert werden.

Die Länge des Hängers 150 in Richtung der Mittelachse L_{H} beträgt etwa 20 mm bis 30 mm. Entlang seiner Querachse Q_{H} besitzt der Hänger 150 eine Breite, welche ausgehend von dem Übergang 145 entlang der Längsachse L_{H} zunächst zunehmend und dann wieder abnehmend ist. Dadurch wird zum einen der erforderliche Übergang 145 bereitgestellt und zum anderen eine ausreichend große Anschlagfläche für die Biegeeinrichtung 30 zum Umlegen des Hängers 150. Die maximale Länge des Hängers 150 in Richtung seiner Querachse Q_{H} beträgt etwa 20 mm bis 30 mm. Die Länge und/oder die Breite ist bzw. sind hier im Wesentlichen unabhängig von der Gesamtgröße des Vorformlings 100.

Der aus dem Vorformling 100 geformte Behälter 200 ist eine Kunststoffflasche. Die Flasche 200 besitzt einen Flaschenhals 210, einen Schulterbereich 220, einen Grund- oder Flaschenkörper 230, einen Bodenbereich 240 und den Hänger 150. Der Behälter 200 kann zum Beispiel ein Fassungsvermögen von etwa 100 ml bis etwa 1000 ml besitzen.

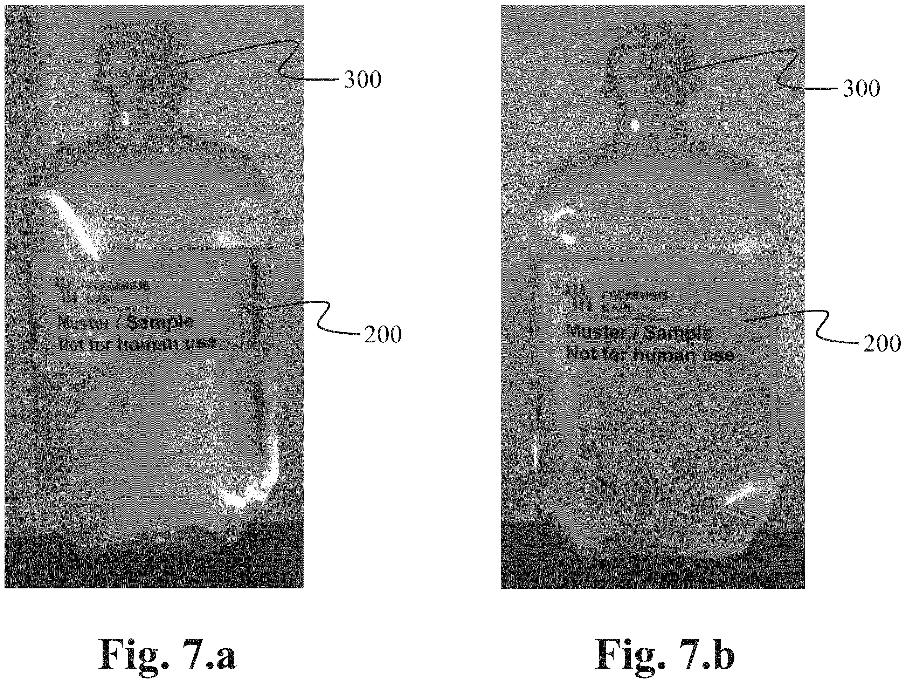

Die Figuren 5.a bis 5.f zeigen einen geformten und noch nicht befüllten Behälter 200 in unterschiedlichen Ansichten. Die Gestalt des geformten Körpers spiegelt im Wesentlichen die Gestalt der Form 42 wider, in welcher der Vorformling 100 aufgeblasen wurde. Die Gestalt und/oder die Konturen des Behälters 200 können sich durch das Befüllen und/oder Sterilisieren noch verändern. Beispielsweise können Kanten abgerundet und/oder Rundungen noch weiter abgerundet werden (siehe dazu die Figuren 7.a und 7.b).

Der Behälter 200 umfasst wie der Vorformling 100, aus dem der Behälter 200 geformt wurde, fünf Bereiche. Einen oberen, die Öffnung 115 umfassenden, ersten Bereich 210, der dann den Behälter- oder Flaschenhals bildet. Dieser Bereich wurde im Wesentlichen nicht aufgeblasen. Er hat im Wesentlichen die ursprüngliche Wandstärke und die Strukturen des Vorformlings 100, zum Beispiel den ersten Flansch 111, den zweiten Flansch 112, die erste Vertiefung 113 und/oder die zweite Vertiefung 114, in diesem Bereich behalten.

Weiterhin umfasst der Behälter200 einen sich zur Unterseite hin anschließenden zweiten Bereich 220, welcher dann den Schulterbereich des Behälters 200 bildet. Dieser Bereich wird zumindest teilweise aufgeblasen. Der Schulterbereich 220 des geformten Behälters 200 besitzt dann eine von dem Flaschenhals 210 zum dritten Bereich 230 hin zumindest abschnittweise abnehmende Wandstärke. Die Wandstärke des Vorformlings 100 ist durch das Aufblasen nun abnehmend von der Wandstärke im ersten Bereich 210 zur Wandstärke im dritten Bereich 230.

Zur Unterseite hin schließt sich der dritte Bereich 230 an, der den Grundkörper 230 oder Flaschenkörper 230 des Behälters 200 bildet. Der Behälter 200 besitzt in diesem Abschnitt zumindest abschnittweise einen im Wesentlichen elliptischen Querschnitt. Der Behälter ist breiter als tief. Dieser dritte Bereich 230 wurde im Wesentlichen vollständig aufgeblasen. Er besitzt jetzt die dünnste Wandstärke in dem geformten Behälter 200. Sie ist jedoch nicht gleichmäßig über den Umfang, da der Vorformling 100 unterschiedlich stark erwärmt und dadurch beim Blasen unterschiedlich stark gedehnt wurde (siehe die Beschreibung zu den Figuren 3.a bis 3.c). Die Seiten, welche die längere Breite B des Behälters 200 bereitstellen, sind zumindest abschnittsweise dünner als die Seiten des Behälters 200, welche die kürzere Tiefe T des Behälters 200 bereitstellen. Zudem ist an den kürzeren Seiten jeweils noch eine sich nach außen erstreckende Wölbung 231 vorgesehen. Insbesondere stellt die Wölbung 231 eine Art Formbereich dar, um eine Formanpassung des Behälters 200 beim Sterilisieren zu ermöglichen.

Der Vorformling 100 wird entlang seiner Längsachse L, unter Vernachlässigung des am Boden 140 angeordneten Hängers 150 gestreckt. Der Grundkörper 130 des Vorformlings 100 wird derart aufgeblasen und dadurch gestreckt, dass die Wandstärke zumindest abschnittsweise verringert wird. Der Vorformling 100 wird entlang seiner ersten Querachse B, welche die Breite B des Behälters 200 bereitstellt, stärker gestreckt als entlang der zweiten Querachse T, welche die Tiefe des Behälters 200 bereitstellt. Daher ist die Wandstärke der langen Seiten des Behälters 200, welche die Breite des Behälters 200 bereitstellen, zumindest abschnittsweise um einen Faktor von etwa 1,5 bis 5 dünner als die Wandstärke der kurzen Seiten des Behälters 200, welche die Tiefe des Behälters 200 bereitstellen.

Ferner schließt sich zur Unterseite hin noch der vierte Bereich 240 an, welcher den Bodenbereich 240 des Behälters 200 bildet. Dieser vierte Bereich 240 wurde zumindest teilweise aufgeblasen. Der Bodenbereich 240 des geformten Behälters 200 besitzt eine von dem Grundkörper 230 zur Unterseite 240 hin zumindest abschnittweise zunehmende Wandstärke. Die Wandstärke des Behälters 200 in dem vierten Bereich 240 ist größer als die Wandstärke im dritten Bereich 230.

An dem Bodenbereich 240 oder an der Unterseite 240 des Behälters 200 ist der Hänger 150 angeordnet. Der Hänger 150 bildet den fünften Bereich 250. Er wird nicht aufgeblasen. Es hat im Wesentlichen seine Eigenschaften behalten. Aber das Umbiegen des Hängers vor dem Zuführen in die Form 42 zum Strecken und Aufblasen resultiert in dem Übergangsbereich 145 zum einen in eine Streckung des Materials auf der Seite des Hängers 150, welche von der Unterseite 240 des Behälters 200 weg gerichtet ist. Zum anderen resultiert dies in eine Stauchung des Materials auf der Seite des Hängers 150, welche der Unterseite 240 des Behälters 200 zugeordnet ist.

Über den Umfang des Hängers 150 ist wenigstens ein Standfuß 241 angeordnet oder ausgebildet. Beispielhaft sind im Bodenbereich 240 hier vier Standfüße 241 ausgebildet. Diese sind über den Umfang verteilt angeordnet. Vorzugsweise sind diese stufenförmig ausgebildet. Die Höhe der Standfüße 241 ist so gewählt, dass der Hänger 150 in einem an der Unterseite 240 des Behälters 200 angelegten Zustand oberhalb der Auflagepunkts der Standfüße 241 auf einem Boden liegt. Der Hänger 150 ist dadurch so von den Füßen 241 umgeben und abgeschirmt, dass er zum einen beim Aufblasen des Behälters 200 nicht mit dem Grundkörper 230 verkleben kann. Zum anderen kann er die Standfestigkeit des Behälters 200 nicht wesentlich beeinträchtigen.

Eine mögliche Ausführungsform eines Verschlusses 300 zum Verschließen des Behälters 200 ist in den Figuren 6.a und 6.b dargestellt. Der Verschluss 300 ist als Verschlusskappe ausgeführt. Sie wird auf den Flaschenhals 210 des Behälters 200 aufgesetzt und schließt den Innenraum des Behälters 200 hermetisch ab. Der innenliegende Rand 303 kommt beim Aufsetzen der Verschlusskappe 300 zur Anlage an dem zweiten Flansch 112 des Behälters 200. Der erste Flansch 111 kann als Führung dienen (siehe Figur 5.b). In einer bevorzugten Ausgestaltung wird die Verschlusskappe 300 mit dem Behälter 200 verschweißt. Dazu werden wenigstens der innenliegende Rand 303 der Verschlusskappe 300 und/oder der zweite Flansch 112 des Behälters 200 entsprechend erwärmt und miteinander verschweißt.

Die Verschlusskappe 300 besitzt hier beispielhaft zwei Zugänge 301 und 302 zu dem Innenraum des Behälters 200. Einen ersten Zugang 301 zur Entnahme einer Flüssigkeit, vorzugsweise mittels eine Spikes, und einen zweiten Zugang 302 zur Zugabe einer Flüssigkeit, beispielsweise einen zu verdünnenden Wirkstoff. Die beiden Zugänge 301 und 302 sind vorzugsweise jeweils mit einem in der Figur nicht dargestellten Septum und mit einem Originalitätsverschluss verschlossen. Die beiden Originalitätsverschlüsse sind hier beispielhaft jeweils als Abbrech- und/oder Abdrehteil ausgebildet mit entsprechenden Pfeilen als Kennzeichnungen für die Entnahme oder Zugabe versehen.

Abschließend zeigen die Figur 7.a und 7.b einen erfindungsgemäßen Behälter 200 vor (Fig. 7.a) und nach der Sterilisation (Fig. 7.b), der hier beispielhaft mit der in den Figuren 6.a und 6.b dargestellten Verschlusskappe 300 verschlossen ist. Der Behälter 200 wird durch das Sterilisieren aufgebläht. Zu erkennen ist, dass sich die Gestalt und/oder die Konturen des Behälters 200 durch das Sterilisieren verändert haben. Beispielsweise sind Kanten abgerundet und/oder Rundungen noch weiter abgerundet. Insbesondere sind die Kanten im Bereich des Bodens 240 etwas abgerundet. Zudem ist auch die Stufenform der Standfüße 241 weniger stark ausgeprägt oder sogar im Wesentlichen vollständig verloren gegangen. Weiterhin ist die Wölbung 231, die eine Art Formbereich darstellt, nun stärker abgerundet. Dadurch hat sich die Tiefe des Behälters 200 vergrößert. Ferner können sich Dehnungsstreifen im Bereich des Grundkörpers 230 ausgebildet haben. Der vorzugsweise als Flasche ausgebildete Behälter 200 kann, in Abhängigkeit von seinem Fassungsvolumen, eine Höhe von etwa 10 cm bis etwa 30 cm, eine Breite von etwa 5 cm bis 15 cm und/oder eine Tiefe von etwa 3 cm bis etwa 8 cm besitzen.

### Bezugszeichen:

- 1: Erste Transporteinrichtung
- X: Bewegungsrichtung der ersten Transporteinrichtung
- 2: Drehstift
- 10: Heizeinrichtung
- 11: Erster Abschnitt der Heizeinrichtung
- 12: Zweiter Abschnitt der Heizeinrichtung
- 20: Überwachungssystem
- 30: Biegevorrichtung oder Kante
- 40: Streck- und Aufblasvorrichtung
- 41: Einführöffnung in der Form der Streck- und Aufblasvorrichtung
- 42: Form der Streck- und Aufblasvorrichtung
- 43: Tisch oder Erhebung am Boden der Form
- 44: Graben am Boden der Form
- 45: Lanze zum Strecken oder Recken
- 100: Vorformling
- 110: Erster Abschnitt des Vorformlings
- 111: Erster Flansch
- 112: Zweiter Flansch
- 113: Erste Vertiefung
- 114: Zweite Vertiefung
- 115: Öffnung oder Einfüllöffnung
- 120: Zweiter Abschnitt des Vorformlings
- 130: Dritter Abschnitt des Vorformlings
- 140: Vierter Abschnitt des Vorformlings
- 145: Übergangsbereich
- 146: Einkerbung
- 150: Hänger am Vorformling oder am Behälter oder fünfter Abschnitt des Vorformlings
- Q_{H}: Querachse des Hängers
- L_{H}: Längsachse des Hängers
- α: Biegewinkel des Hängers (Winkel zwischen der Längsachse des Hängers und der Längsachse des Vorformlings)

- 200: Behälter oder Flasche
- 210: Erster Abschnitt oder Flaschenhals des Behälters
- 220: Zweiter Abschnitt oder Schulterbereich des Behälters
- 230: Dritter Abschnitt oder Grundkörper oder Flaschenkörper des Behälters
- 231: Wölbung oder Formbereich am Behälter
- 240: Vierter Abschnitt oder Bodenbereich des Behälters
- 241: Standfuß
- 250: Fünfter Bereich oder Hänger des Behälters

- L: Längsachse des Vorformlings und/oder des Behälters
- B: Erste Querachse entlang der Breite des Vorformlings und/oder des Behälters
- T: Zweite Querachse entlang der Tiefe des Vorformlings und/oder des Behälters

- 300: Verschluss oder Verschlusskappe
- 301: Erster Zugang zur Entnahme einer Flüssigkeit
- 302: Zweiter Zugang zur Zugabe einer Flüssigkeit

- S100: Bereitstellen des Vorformlings
- S200: Erwärmen und Ausrichten des Vorformlings
- S300: Umbiegen des Hängers
- S400: Strecken und Aufblasen des Vorformlings
- S500: Reinigen und gegebenenfalls Trocknen des Behälters
- S600: Befüllen des Behälters
- S700: Verschließen des Behälters
- S800: Sterilisieren des Behälters
- S900: Überprüfen und/oder Etikettieren des Behälters und/oder Anordnen einer Vielzahl an Behälter in einem Karton und Verschließen des Kartons

## Patentansprüche

1. Verfahren zur Herstellung eines mit einer Infusionslösung befüllten Behälters (200) mit einem Grundkörper (230), der eine Breite, die sich entlang einer ersten Querachse (B) des Behälters (200) erstreckt, und eine Tiefe, die sich entlang einer senkrecht zu der ersten Querachse (B) verlaufenden, zweiten Querachse (T) des Behälters (200) erstreckt, besitzt und wobei die Breite des Grundkörpers (230) größer als die Tiefe des Grundkörpers (230) ist, umfassend die folgenden Verfahrensschritte:
- Bereitstellen eines Vorformlings (100) mit einem an einem Boden des Vorformlings (100) angeordneten Hänger (150), wobei eine Querachse (Q_{H}) des Hängers (150) im Wesentlichen quer, vorzugsweise senkrecht, zu der ersten Querachse (B) des Behälters (200) angeordnet ist,
- Erwärmen des bereitgestellten Vorformlings (100) in einer Heizeinrichtung (10, 11, 12),
- Zuführen des erwärmten Vorformlings (100) in eine Streck- und Aufblasvorrichtung (40),
- Strecken und Aufblasen des Vorformlings (100) in der Streck- und Aufblasvorrichtung (40), so dass der Behälter (200) für die Infusionslösung aus dem Vorformling (100) geformt wird,
- Reinigen des geformten Behälters (200) und gegebenenfalls Trocknen des gereinigten Behälters (200) in einer Trockeneinrichtung,
- Befüllen des gereinigten und gegebenenfalls getrockneten Behälters (200) über eine in dem Behälter (200) vorhandene Einfüllöffnung (115) zumindest mit einer Infusionslösung in einer Füllanlage,
- Verschließen des Behälters (200) durch Aufbringen eines Verschlusses (300), vorzugsweise einer Verschlusskappe (300), auf die Einfüllöffnung (115) des Behälters (200),
- Sterilisieren des verschlossenen Behälters (200) in einem Autoklaven,
wobei der Hänger (150) des Vorformlings (100) vor dem Strecken und Aufblasen in der Streck- und Aufblasvorrichtung (40) ausgerichtet und in Richtung der ersten Querachse (B) des aus dem Vorformling (100) geformten Behälters (200) umgelegt wird, wobei der Vorformling (100) so ausgerichtet wird, dass die Querachse (Q_{H}) des Hängers (150) im Wesentlichen quer, vorzugsweise senkrecht, zu einer Bewegungsrichtung (X) des Vorformlings (100) liegt.

2. Verfahren nach vorstehendem Anspruch, **dadurch gekennzeichnet, dass** der Hänger (150) des Vorformlings (100) von einer Längsachse (L) des Vorformlings (100) weg in Richtung auf den Boden des Vorformlings (100) gelegt wird.

3. Verfahren nach einem der vorstehenden Ansprüche, **dadurch gekennzeichnet, dass** der Vorformling (100) vor dem Strecken und Aufblasen in der Streck- und Aufblasvorrichtung (40) so ausgerichtet wird, dass die zweite Querachse (T) des Behälters (200) im Wesentlichen quer, vorzugsweise senkrecht zu der Bewegungsrichtung (X) des Vorformlings (100) in der Heizeinrichtung (10, 11, 12) angeordnet ist.

4. Verfahren nach einem der vorstehenden Ansprüche, **dadurch gekennzeichnet, dass** zwei gegenüberliegende Bereiche des Vorformlings (100), welche sich in Richtung der ersten Querachse (B) des aus dem Vorformling (100) geformten Behälters (200) erstrecken, stärker erwärmt werden als zwei gegenüberliegenden Bereiche des Vorformlings (100), welche sich in Richtung der zweiten Querachse (T) des aus dem Vorformling (100) geformten Behälters (200) erstrecken.

5. Verfahren nach einem der vorstehenden Ansprüche, **dadurch gekennzeichnet, dass** der Vorformling (100) über seinen Umfang im Wesentlichen gleichmäßig erwärmt wird und die gegenüberliegende Bereiche des Vorformlings (100), welche sich in Richtung der ersten Querachse (B) des aus dem Vorformling (100) geformten Behälters (200) erstrecken, mit einer dünneren Wandstärke bereitgestellt werden als die zwei gegenüberliegenden Bereiche, welche sich in Richtung der zweiten Querachse (T) des aus dem Vorformling (100) geformten Behälters (200) erstrecken.

6. Verfahren nach einem der vorstehenden Ansprüche, **dadurch gekennzeichnet, dass** der Vorformling (100) über seinen Umfang zumindest in dem Bereich, welcher den Grundkörper (230) des aus dem Vorformling (100) geformten Behälters (200) bildet, mit einer im Wesentlichen gleichmäßigen Wandstärke bereitgestellt wird und der Vorformling (100) über seinen Umfang zumindest in diesem Bereich im Wesentlichen nicht gleichmäßig erwärmt wird.

7. Verfahren nach einem der vorstehenden Ansprüche, **dadurch gekennzeichnet, dass** der Vorformling (100) in der Heizeinrichtung (10, 11) über seinen Umfang zumindest in dem Bereich, welcher den Grundkörper (230) des aus dem Vorformling (100) geformten Behälters (200) bildet, zunächst im Wesentlichen gleichmäßig erwärmt wird und die zwei gegenüberliegenden Bereiche des Vorformlings (100), welche dann die Seiten des aus dem Vorformling (100) geformten Behälters (200) bereitstellen, die sich in Richtung der ersten Querachse (B) erstrecken, vor dem Zuführen in die Streck- und Blaseinrichtung (40) stärker erwärmt werden.

8. Verfahren nach einem der vorstehenden Ansprüche, **dadurch gekennzeichnet, dass** der Vorformling (100) durch die Heizeinrichtung (10, 11, 12) hindurch bewegt wird und zumindest in einem Teil der Heizeinrichtung (11) über seinen Umfang rotiert wird.

9. Verfahren nach einem der vorstehenden Ansprüche, **dadurch gekennzeichnet, dass**, insbesondere während der Vorformling (100) durch die Heizeinrichtung (10, 11, 12) hindurch bewegt wird, das Rotieren des Vorformling (100) in der Heizeinrichtung (12) gestoppt und der Vorformling (100) so ausgerichtet wird, dass die Querachse (Q_{H}) des Hängers (150) im Wesentlichen quer, vorzugsweise senkrecht, zu der Bewegungsrichtung (X) des Vorformlings (100) in der Heizeinrichtung (10, 11, 12) angeordnet ist.

10. Verfahren nach einem der vorstehenden Ansprüche, **dadurch gekennzeichnet,**
**dass** die Streck- und Aufblasvorrichtung (40) mit einer Form bereitgestellt wird, welche an einer Unterseite zumindest abschnittsweise eine Erhebung (43) aufweist, welche über einen Umfang zumindest abschnittsweise mit einem Graben (44) umgeben ist, wobei der erwärmte Vorformling (100) zunächst so gestreckt wird, dass zumindest der Hänger (150) zur Anlage auf der Erhebung (43) kommt und der Vorformling (100) dann so aufgeblasen wird, dass er zumindest abschnittsweise in dem Graben zur Anlage kommt und dort eine Mehrzahl an Standfüßen (241) geformt wird und/oder
**dass** der Verschluss (300) als eine Verschlusskappe (300) bereitgestellt wird, insbesondere wobei die Verschlusskappe (300) zumindest abschnittsweise erwärmt wird und/oder die Einfüllöffnung (115) des Behälters (200) zumindest abschnittsweise, erwärmt wird und das Verschließen des Behälters (200) erfolgt, indem die Verschlusskappe (300) auf die Einfüllöffnung (115) des Behälters (200) aufgeschweißt wird und/oder
**gekennzeichnet durch** ein Überprüfen des sterilisierten Behälters (200) in einer Inspektionseinrichtung und/oder ein Aufbringen eines Etiketts auf den überprüften Behälter (200) und/oder ein Anordnen einer Vielzahl an etikettierten Behältern (200) in einem Karton und ein Verschließen des Kartons.

11. Anlage zur Herstellung eines mit einer Infusionslösung befüllten Behälters (200), umfassend:
- Eine Einrichtung zum Bereitstellen eines Vorformlings (100) mit einem an einem Boden des Vorformlings (100) angeordneten Hänger (150),
- eine Heizeinrichtung (10, 11, 12) zum Erwärmen des bereitgestellten Vorformlings (100),
- eine Einrichtung (40) zum Strecken und Aufblasen des Vorformlings (100), so dass der Behälter (200) für die Infusionslösung aus dem Vorformling (100) formbar ist,
- eine Einrichtung zum Reinigen des geformten Behälters (200) und gegebenenfalls eine Einrichtung zum Trocknen des gereinigten Behälters (200),
- eine Füllanlage, in welcher der gereinigte und gegebenenfalls getrocknete Behälter (200) über eine in dem Behälter (200) vorhandene Einfüllöffnung (15) zumindest mit einer Infusionslösung befüllt werden kann,
- eine Einrichtung zum Verschließen des Behälters, einen Autoklaven, in dem der verschlossene Behälter (200) sterilisierbar ist, und
eine erste Transporteinrichtung (1) zum Führen des Vorformlings (100) in der Heizeinrichtung (10, 11, 12) und insbesondere zum Zuführen des erwärmten Vorformlings (100) in die Streck- und Aufblasvorrichtung (40), in welcher der Vorformling (100) drehbar gelagert und über eine Drehung ausgerichtet werden kann und eine vor der Streck- und Aufblasvorrichtung (40) angeordnete Biegevorrichtung (40), in welcher der, zuvor ausgerichtete, Hänger (150) des Vorformlings (100), umgelegt werden kann.

12. Anlage nach vorstehendem Anspruch, **dadurch gekennzeichnet,**
**dass** die erste Transporteinrichtung (1) wenigstens einen bewegbar angeordneten Drehstift (2) umfasst, auf welchem der Vorformling (100) lagerbar ist und über den die Drehung des Vorformlings (100) bereitstellbar ist und/oder
**dass** die Biegevorrichtung (40) durch eine vor der Streck- und Aufblasvorrichtung (40), beispielsweise in oder nach der Heizeinrichtung (10, 11, 12), angeordnete Kante bereitstellbar ist, die ortsfest und seitlich versetzt gegenüber der ersten Transporteinrichtung (1) so angeordnet ist, dass der Hänger (150) des Vorformlings (100) mittels der Bewegung der ersten Transporteinrichtung (1) gegen die Kante (40) bewegt, dort zur Anlage gebracht und umgebogen werden kann.

## Claims

1. Method for producing a container (200) filled with an infusion solution and having a main body (230) which includes a width extending along a first transverse axis (B) of the container (200), and a depth extending along a second transverse axis (T) of the container (200), which runs perpendicularly to the first transverse axis (B), and wherein the width of the main body (230) is larger than the depth of the main body (230), the method comprising the following method steps:
- providing a preform (100) having a hanger (150) which is disposed on a base of the preform (100), wherein a transverse axis (Q_{H}) of the hanger (150) is disposed so as to be substantially transverse, preferably perpendicular, to the first transverse axis (B) of the container (200);
- heating the provided preform (100) in a heating installation (10, 11, 12);
- infeeding the heated preform (100) to a stretching and blowing apparatus (40);
- stretching and blowing the preform (100) in the stretching and blowing apparatus (40) such that the container (200) for the infusion solution is molded from the preform (100);
- cleaning the molded container (200) and optionally drying the cleaned container (200) in a drying installation;
- filling the cleaned and optionally dried container (200) with at least one infusion solution in a filling system, by way of a filling opening (115) which is present in the container (200),
- closing the container (200) by attaching a closure (300), preferably a closure cap (300), to the filling opening (115) of the container (200);
- sterilizing the closed container (200) in an autoclave, wherein the hanger (150) of the preform (100) prior to stretching and blowing in the stretching and blowing apparatus (40) is aligned and turned over in the direction of the first transverse axis (B) of the container (200) molded from the preform (100), wherein the preform (100) is aligned such that the transverse axis (Q_{H}) of the hanger (150) lies so as to be substantially transverse, preferably perpendicular, to a movement direction (X) of the preform (100).

2. Method according to the preceding claim, **characterized in that** the hanger (150) of the preform (100) is placed away from a longitudinal axis (L) of the preform (100) in the direction of the base of the preform (100) .

3. Method according to either of the preceding claims, **characterized in that** the preform (100) prior to stretching and blowing in the stretching and blowing apparatus (40) is aligned such that the second transverse axis (T) of the container (200) is disposed in the heating installation (10, 11, 12) so as to be substantially transverse, preferably perpendicular, to the movement direction (X) of the preform (100).

4. Method according to one of the preceding claims, **characterized in that** two mutually opposite regions of the preform (100) that extend in the direction of the first transverse axis (B) of the container (200) molded from the preform (100) are heated more intensely than two mutually opposite regions of the preform (100) that extend in the direction of the second transverse axis (T) of the container (200) molded from the preform (100).

5. Method according to one of the preceding claims, **characterized in that** the preform (100) along the circumference thereof is heated in a substantially uniform manner, and the mutually opposite regions of the preform (100) that extend in the direction of the first transverse axis (B) of the container (200) molded from the preform (100) are provided with a thinner wall thickness than the two mutually opposite regions that extend in the direction of the second transverse axis (T) of the container (200) molded from the preform (100).

6. Method according to one of the preceding claims, **characterized in that** the preform (100) along the circumference thereof at least **in that** region that forms the main body (230) of the container (200) molded from the preform (100) is provided with a substantially uniform wall thickness, and the preform (100) along the circumference thereof at least **in that** region is not heated in a substantially uniform manner.

7. Method according to one of the preceding claims, **characterized in that** the preform (100) along the circumference thereof in the heating installation (10, 11) at least **in that** region that forms the main body (230) of the container (200) molded from the preform (100) is initially heated in a substantially uniform manner, and the two mutually opposite regions of the preform (100) which then provide the sides of the container (200) molded from the preform (100) which extend in the direction of the first transverse axis (B) prior to infeeding to the stretching and blowing apparatus (40) are heated more intensely.

8. Method according to one of the preceding claims, **characterized in that** the preform (100) is moved through the heating installation (10, 11, 12) and said preform (100) along the circumference thereof is rotated at least in a part of the heating installation (11).

9. Method according to one of the preceding claims, **characterized in that** in particular while the preform (100) is moved through the heating installation (10, 11, 12), rotation of the preform (100) in the heating installation (12) is stopped and the preform (100) is aligned such that the transverse axis (Q_{H}) of the hanger (150) is disposed so as to be substantially transverse, preferably perpendicular, to the movement direction (X) of the preform (100) in the heating installation (10, 11, 12) .

10. Method according to one of the preceding claims, **characterized in**
- **that** the stretching and blowing apparatus (40) is provided having a mold which on a lower side at least in portions has an elevation (43) which along a circumference is at least in portions surrounded by a trench (44), wherein the heated preform (100) is initially stretched such that at least the hanger (150) comes to bear on the elevation (43) and the preform (100) is then blown such that the latter at least in portions comes to bear in the trench, and a plurality of feet (241) are molded therein, and/or
- **that** the closure (300) is provided as a closure cap (300), in particular wherein the closure cap (300) at least in portions is heated and/or the filling opening (115) of the container (200) at least in portions is heated, and closing of the container (200) is performed in that the closure cap (300) is welded onto the filling opening (115) of the container (200), and/or
**characterized by** checking the sterilized container (200) in an inspection installation, and/or attaching a label to the checked container (200), and/or disposing a multiplicity of labeled containers (200) in a carton, and closing the carton.

11. System for producing a container (200) filled with an infusion solution, the system comprising:
- an installation for providing a preform (100), having a hanger (150) disposed on a base of the preform (100);
- a heating installation (10, 11, 12) for heating the provided preform (100);
- an apparatus (40) for stretching and blowing the preform (100) such that the container (200) for the infusion solution is moldable from the preform (100);
- an installation for cleaning the molded container (200), and optionally an installation for drying the cleaned container (200);
- a filling system in which the cleaned and optionally dried container (200) by way of a filling opening (15) which is present in the container (200) may be filled at least with one infusion solution;
- an installation for closing the container,
- an autoclave in which the closed container (200) is sterilizable; and
- a first conveying installation (1) for guiding the preform (100) in the heating installation (10, 11, 12) and in particular for infeeding the heated preform (100) to the stretching and blowing apparatus (40) in which the preform (100) may be rotatably mounted and aligned by way of rotation, and a bending apparatus (40) which is disposed ahead of the stretching and blowing apparatus (40) and in which the pre-aligned hanger (150) of the preform (100) may be turned over.

12. System according to the preceding claim, **characterized in**
- **that** the first conveying installation (1) has at least one movably disposed rotary pin (2) on which the preform (100) is mountable and by way of which rotation of the preform (100) is providable, and/or
- **that** the bending apparatus (40) is providable by an edge which is disposed ahead of the stretching and blowing apparatus (40), for example in or after the heating installation (10, 11, 12) and which in relation to the first conveying installation (1) is disposed so as to be locationally fixed and laterally offset such that the hanger (150) of the preform (100) by means of the movement of the first conveying installation (1) may be moved against the edge (40), be brought to bear and bent thereon.

## Revendications

1. Procédé de fabrication d'un récipient (200) rempli d'une solution de perfusion, comprenant un corps de base (230) qui présente une largeur qui s'étend le long d'un premier axe transversal (B) du récipient (200) et une profondeur qui s'étend le long d'un deuxième axe transversal (T) du récipient (200) s'étendant perpendiculairement au premier axe transversal (B), et dans lequel la largeur du corps de base (230) est supérieure à la profondeur du corps de base (230), comportant les étapes de procédé suivantes :
- fourniture d'une préforme (100) dotée d'un moyen de suspension (150) disposé au niveau d'un fond de la préforme (100), un axe transversal (Q_{H}) du moyen de suspension (150) étant disposé sensiblement transversalement, de préférence perpendiculairement, au premier axe transversal (B) du récipient (200),
- chauffage de la préforme (100) fournie dans un dispositif de chauffage (10, 11, 12),
- introduction de la préforme (100) chauffée dans un dispositif d'étirage et de soufflage (40),
- étirage et soufflage de la préforme (100) dans le dispositif d'étirage et de soufflage (40), de telle sorte que le récipient (200) pour la solution de perfusion soit formé à partir de la préforme (100),
- nettoyage du récipient (200) formé et éventuellement séchage du récipient (200) nettoyé dans un dispositif de séchage,
- remplissage du récipient (200) nettoyé et éventuellement séché, par le biais d'une ouverture de remplissage (115) présente dans le récipient (200), au moins avec une solution de perfusion dans une installation de remplissage,
- fermeture du récipient (200) par application d'une fermeture (300), de préférence d'un capuchon de fermeture (300), sur l'ouverture de remplissage (115) du récipient (200),
- stérilisation du récipient (200) fermé dans un autoclave, le moyen de suspension (150) de la préforme (100) étant orienté avant l'étirage et le soufflage dans le dispositif d'étirage et de soufflage (40) et étant rabattu dans la direction du premier axe transversal (B) du récipient (200) formé à partir de la préforme (100), la préforme (100) étant orientée de telle sorte que l'axe transversal (Q_{H}) du moyen de suspension (150) soit situé sensiblement transversalement, de préférence perpendiculairement, à une direction de déplacement (X) de la préforme (100).

2. Procédé selon la revendication précédente, **caractérisé en ce que** le moyen de suspension (150) de la préforme (100) est placé à l'écart d'un axe longitudinal (L) de la préforme (100) en direction du fond de la préforme (100).

3. Procédé selon l'une des revendications précédentes, **caractérisé en ce que** la préforme (100) est, avant l'étirage et le soufflage dans le dispositif d'étirage et de soufflage (40), orientée de telle sorte que le deuxième axe transversal (T) du récipient (200) soit disposé dans le dispositif de chauffage (10, 11, 12) sensiblement transversalement, de préférence perpendiculairement, à la direction de déplacement (X) de la préforme (100).

4. Procédé selon l'une des revendications précédentes, **caractérisé en ce que** deux régions se faisant face de la préforme (100), lesquelles s'étendent dans la direction du premier axe transversal (B) du récipient (200) formé à partir de la préforme (100), sont chauffées plus intensément que deux régions se faisant face de la préforme (100) qui s'étendent dans la direction du deuxième axe transversal (T) du récipient (200) formé à partir de la préforme (100).

5. Procédé selon l'une des revendications précédentes, **caractérisé en ce que** la préforme (100) est chauffée sensiblement uniformément sur sa périphérie et les régions se faisant face de la préforme (100), lesquelles s'étendent dans la direction du premier axe transversal (B) du récipient (200) formé à partir de la préforme (100), sont produites de manière à présenter une épaisseur de paroi plus mince que les deux régions se faisant face qui s'étendent dans la direction du deuxième axe transversal (T) du récipient (200) formé à partir de la préforme (100).

6. Procédé selon l'une des revendications précédentes, **caractérisé en ce que** la préforme (100) est produite de manière à présenter une épaisseur de paroi sensiblement uniforme sur sa périphérie au moins dans la région qui forme le corps de base (230) du récipient (200) formé à partir de la préforme (100), et la préforme (100) n'est sensiblement pas chauffée uniformément sur sa périphérie au moins dans cette région.

7. Procédé selon l'une des revendications précédentes, **caractérisé en ce que** la préforme (100) est chauffée tout d'abord sensiblement uniformément dans le dispositif de chauffage (10, 11) sur sa périphérie au moins dans la région qui forme le corps de base (230) du récipient (200) formé à partir de la préforme (100), et les deux régions se faisant face de la préforme (100), lesquelles produisent alors les côtés du récipient (200) formé à partir de la préforme (100) qui s'étendent dans la direction du premier axe transversal (B), sont chauffées plus intensément avant l'introduction dans le dispositif d'étirage et de soufflage (40).

8. Procédé selon l'une des revendications précédentes, **caractérisé en ce que** la préforme (100) est déplacée à travers le dispositif de chauffage (10, 11, 12) et est animée d'un mouvement de rotation sur sa périphérie au moins dans une partie du dispositif de chauffage (11).

9. Procédé selon l'une des revendications précédentes, **caractérisé en ce qu'**en particulier pendant que la préforme (100) est déplacée à travers le dispositif de chauffage (10, 11, 12), la rotation de la préforme (100) dans le dispositif de chauffage (12) est arrêtée et la préforme (100) est orientée de telle sorte que l'axe transversal (Q_{H}) du moyen de suspension (150) soit disposé sensiblement transversalement, de préférence perpendiculairement, à la direction de déplacement (X) de la préforme (100) dans le dispositif de chauffage (10, 11, 12).

10. Procédé selon l'une des revendications précédentes, **caractérisé en ce que**
le dispositif d'étirage et de soufflage (40) est doté d'un moule, lequel comprend un rehaussement (43) sur un côté inférieur au moins dans certaines zones, lequel rehaussement est entouré d'un sillon (44) sur une périphérie au moins dans certaines zones, la préforme (100) chauffée étant tout d'abord étirée de telle sorte qu'au moins le moyen de suspension (150) vienne en appui sur le rehaussement (43) et la préforme (100) étant alors gonflée de telle sorte qu'elle vienne en appui dans le sillon au moins dans certaines zones et qu'une pluralité de pieds de support (241) y soit formée et/ou
**en ce que** la fermeture (300) est produite en tant que capuchon de fermeture (300), en particulier le capuchon de fermeture (300) étant chauffé au moins dans certaines zones et/ou l'ouverture de remplissage (115) du récipient (200) étant chauffée au moins dans certaines zones et la fermeture du récipient (200) s'effectuant par soudage du capuchon de fermeture (300) sur l'ouverture de remplissage (115) du récipient (200) et/ou
**caractérisé par** un contrôle du récipient stérilisé (200) dans un dispositif d'inspection et/ou une application d'une étiquette sur le récipient (200) contrôlé et/ou un agencement d'une pluralité de récipients (200) étiquetés dans un carton et une fermeture du carton.

11. Installation de fabrication d'un récipient (200) rempli d'une solution de perfusion, comportant :
- un dispositif de fourniture d'une préforme (100) dotée d'un moyen de suspension (150) disposé au niveau d'un fond de la préforme (100),
- un dispositif de chauffage (10, 11, 12) pour le chauffage de la préforme (100) fournie,
- un dispositif (40) d'étirage et de soufflage de la préforme (100) de telle sorte que le récipient (200) pour la solution de perfusion puisse être formé à partir de la préforme (100),
- un dispositif de nettoyage du récipient (200) formé et éventuellement un dispositif de séchage du récipient (200) nettoyé,
- une installation de remplissage dans laquelle le récipient (200) nettoyé et éventuellement séché peut être rempli, par le biais d'une ouverture de remplissage (15) présente dans le récipient (200), au moins avec une solution de perfusion,
- un dispositif de fermeture du récipient,
- un autoclave dans lequel le récipient (200) fermé peut être stérilisé, et
- un premier dispositif de transport (1) pour le guidage de la préforme (100) dans le dispositif de chauffage (10, 11, 12) et en particulier pour l'introduction de la préforme (100) chauffée dans le dispositif d'étirage et de soufflage (40), dans lequel la préforme (100) est montée rotative et peut être orientée par une rotation, et un dispositif de pliage (40) disposé avant le dispositif d'étirage et de soufflage (40), dispositif de pliage dans lequel le moyen de suspension (150), préalablement orienté, de la préforme (100) peut être rabattu.

12. Installation selon la revendication précédente, **caractérisée**
**en ce que** le premier dispositif de transport (1) comporte au moins une goupille rotative (2) disposée de manière mobile, sur laquelle la préforme (100) peut être montée et par le biais de laquelle la rotation de la préforme (100) peut être produite et/ou
**en ce que** le dispositif de pliage (40) peut être produit par une arête disposée avant le dispositif d'étirage et de soufflage (40), par exemple dans ou après le dispositif de chauffage (10, 11, 12), laquelle arête est disposée de manière fixe et décalée latéralement par rapport au premier dispositif de transport (1) de telle sorte que le moyen de suspension (150) de la préforme (100) puisse être, grâce au déplacement du premier dispositif de transport (1), déplacé contre l'arête (40), amené en appui contre celle-ci et rabattu.
